# EUROPÄISCHE PATENTSCHRIFT

(11) **EP 4 096 421 B1**
(45) Veröffentlichungstag und Bekanntmachung des Hinweises auf die Patenterteilung: **28.08.2024**
(21) Anmeldenummer: 21701421.6
(22) Anmeldetag: 14.01.2021
(51) Int. Cl.: A23F 5/20, A23L 3/32, B01J 19/08, C02F 1/48

(54) **VERFAHREN ZUM HERSTELLEN VON ENTKOFFEINIERTEN ROHKAFFEEBOHNEN, ENTKOFFEINIERTEN GERÖSTETEN KAFFEEBOHNEN ODER DARAUS HERGESTELLTEN ZUBEREITUNGEN, ENTSPRECHENDE ENTKOFFEINIERTE ROHKAFFEEBOHNE, ENTKOFFEINIERTE GERÖSTETE KAFFEEBOHNE UND DARAUS HERGESTELLTE ZUBEREITUNG, ENTSPRECHENDE VERWENDUNGEN UND ENTSPRECHENDE ANLAGEN**
METHOD FOR THE PRODUCTION OF DECAFFEINATED GREEN COFFEE BEANS, DECAFFEINATED ROASTED COFFEE BEANS OR PREPARATIONS PRODUCED THEREFROM, CORRESPONDING DECAFFEINATED GREEN COFFEE BEAN, DECAFFEINATED ROASTED COFFEE BEAN AND PREPARATION PREPARED THEREFROM, CORRESPONDING USES AND CORRESPONDING SYSTEMS
PROCÉDÉ DE FABRICATION DE GRAINS DE CAFÉ VERT DÉCAFÉINÉS, DE GRAINS DE CAFÉ TORRÉFIÉS DÉCAFÉINÉS OU DE PRÉPARATIONS FABRIQUÉES À PARTIR DE CEUX-CI, GRAINS DE CAFÉ VERT DÉCAFÉINÉS, GRAINS DE CAFÉ TORRÉFIÉS DÉCAFÉINÉS OU PRÉPARATION FABRIQUÉE À PARTIR DE CEUX-CI CORRESPONDANTS, UTILISATION CORRESPONDANTE ET INSTALLATIONS CORRESPONDANTES

(30) Priorität: 28.01.2020 EP 20154208
(43) Veröffentlichungstag der Anmeldung: 07.12.2022
(73) Patentinhaber: ANKA Angewandte Kaffeetechnologie GmbH, 28237 Bremen (DE)
(72) Erfinder: SCHWITAL, Jan Christoph, 22605 Hamburg (DE); SÜSSE-HERRMANN, Oliver, 27798 Hude (DE)
(74) Vertreter: Eisenführ Speiser
(86) Internationale Anmeldenummer: PCT/EP2021/050724
(87) Internationale Veröffentlichungsnummer: WO 2021/151685

(56) Entgegenhaltungen:
- EP-B1- 2 544 552
- US-A- 4 911 941
- US-A- 5 443 709
- US-B2- 8 067 216
- BARBOSA-PEREIRA LETRICIA ET AL: "Pulsed Electric Field Assisted Extraction of Bioactive Compounds from Cocoa Bean Shell and Coffee Silverskin", FOOD AND BIOPROCESS TECHNOLOGY ; AN INTERNATIONAL JOURNAL, SPRINGER-VERLAG, NEW YORK, vol. 11, no. 4, 13 January 2018 (2018-01-13), pages 818 - 835, XP036447788, ISSN: 1935-5130, [retrieved on 20180113], DOI: 10.1007/S11947-017-2045-6

## Beschreibung

Die vorliegende Erfindung betrifft ein Verfahren zum Herstellen von entkoffeinierten Rohkaffeebohnen, entkoffeinierten gerösteten Kaffeebohnen oder daraus hergestellten Zubereitungen, wobei ein Verfahrensschritt das PEF (pulsed electric field)-Behandeln (gegebenenfalls vorgequollener) Rohkaffeebohnen umfasst. Die Erfindung ist in den beigefügten Patentansprüchen definiert; bestimmte Begriffsdefinitionen sind in der Beschreibung enthalten. Weitere Details und bevorzugte Ausgestaltungen des erfindungsgemäßen Verfahrens ergeben sich aus den beigefügten Patentansprüchen sowie aus der nachfolgenden Beschreibung. Die vorliegende Erfindung betrifft zudem eine entkoffeinierte Rohkaffeebohne, eine entkoffeinierte geröstete Kaffeebohne und eine daraus hergestellte Zubereitung, herstellbar durch ein erfindungsgemäßes Verfahren, wobei das PEF-Behandeln von Rohkaffeebohnen zu Veränderungen an Zellwänden und Zellmembranen in den Rohkaffeebohnen führt. Die vorliegende Erfindung betrifft auch die Verwendung einer PEF-Vorrichtung zur Behandlung von (gegebenenfalls vorgequollenen) Rohkaffeebohnen. Die vorliegende Erfindung betrifft darüber hinaus eine Anlage zum Entkoffeinieren von Rohkaffeebohnen. Jeweils ergeben sich Einzelheiten und bevorzugte Ausgestaltungen aus den beigefügten Patentansprüchen und der nachfolgenden Beschreibung.

Das Entkoffeinieren von Rohkaffeebohnen ist ein verbreitetes Verfahren zur Herstellung von entkoffeiniertem Kaffee. Das Entkoffeinieren der Rohkaffeebohnen erfolgt dabei üblicherweise in einem Extraktionsprozess mit organischen und/oder anorganischen Extraktionsmitteln. Diese Extraktionsmittel müssen dabei verschiedene Anforderungen erfüllen; so ist beispielsweise von Bedeutung, wie gut und wie selektiv sich Koffein in die jeweiligen Extraktionsmittel extrahieren lässt. Zudem spielen bei der Auswahl eines geeigneten Extraktionsmittels die Kosten, die Handhabbarkeit, rechtliche Beschränkungen und die Verfügbarkeit eine Rolle.

Regelmäßig werden Rohkaffeebohnen vor einem Extraktionsprozess zum Zwecke der Entkoffeinierung mit Wasser und/oder Wasserdampf und/oder einer anderen Quellflüssigkeit (siehe die Definition weiter unten) vorgequollen. Dabei erhöht sich regelmäßig das Volumen der Rohkaffeebohnen und die Diffusion von Substanzen innerhalb der Rohkaffeebohne sowie Diffusionsprozesse über ihre Außenfläche werden erleichtert. In viele Fällen ermöglicht erst ein solches Vorquellen eine wirtschaftlich sinnvolle Durchführung der nachfolgenden Koffeinextraktion (vergl. hierzu Kapitel 10 im Fachbuch "The Craft and Science ofCoffee", Elsevier, 2017, ISBN 978-0-12-803520-7, editiert von Britta Vollmer).

Nach dem Extraktionsprozess, der an vorgequollenen Rohkaffeebohnen durchgeführt wird (und vor einem anschließenden Rösten der entkoffeinierten Rohkaffeebohnen) muss die beim Vorquellen in die Rohkaffeebohne eingedrungene Quellflüssigkeit (z. B. Wasser) zunächst durch Trocknen entfernt werden. Dies ist ein zeit-, energie- und kostenintensiver Prozess, daher besteht ein Bedarf, möglichst wenig Quellflüssigkeit für das Vorquellen der Rohkaffeebohnen einzusetzen bzw. das Entfernen der Quellflüssigkeit aus den Rohkaffeebohnen zu erleichtern, wobei Nachteile hinsichtlich der Enkoffeinierungsleistung vermieden werden sollen.

Für eine effiziente Entkoffeinierung (d.h., Extraktion von Koffein aus Rohkaffeebohnen) sollte das Koffein in dem gewählten Extraktionsmittel löslich sein. Häufig werden Extraktionsmittel eingesetzt, in denen Koffein gut löslich ist (z. B. Dichlormethan, Ethylacetat, Wasser), die jedoch nicht sehr spezifisch Koffein lösen, sondern ebenfalls gute Lösungs- und Extraktionsmittel für weitere in der Rohkaffeebohne enthaltene Stoffe sind. Bei Verwendung solcher Lösungs- und Extraktionsmittel ist zwar ein effizientes Extrahieren von Koffein aus der Rohkaffeebohne möglich, dabei werden jedoch auch in unerwünschtem Ausmaß Aromastoffe und/oder sonstige Wirkstoffe extrahiert, sodass sich die Verwendung dieser Lösungs- und Extraktionsmittel auf den Geschmack und/oder die sonstige Wirkung der aus den so entkoffeinierten Rohkaffeebohnen hergestellten Kaffeezubereitungen auswirkt. Andere Extraktionsmittel (wie z. B. flüssiges Kohlenstoffdioxid) lösen Koffein zwar nicht besonders gut, jedoch sehr spezifisch. Bei Einsatz solcher Extraktionsmittel kann Koffein aus den vorgequollenen Rohkaffeebohnen extrahiert werden, ohne dass Aromastoffe und/oder sonstige Wirkstoffe mitextrahiert werden. Aufgrund der insgesamt jedoch schlechten Löslichkeit von Koffein in diesen spezifisch extrahierenden Extraktionsmitteln ist ihre Verwendung mit einem erheblichen Mehraufwand gegenüber Extraktionsmitteln mit höherer Löslichkeit für Koffein verbunden.

Es besteht daher ein Bedarf, den Verfahrensaufwand beim Entkoffeinieren zu reduzieren. Insbesondere bei dem Einsatz von für Koffein selektiven, aber im Sinne des Lösungsvermögens schwachen, Lösungsmitteln, wie zum Beispiel flüssigem Kohlenstoffdioxid.

Bei Behandlung von Rohkaffeebohnen (insbesondere von vorgequollenen Rohkaffeebohnen) kommt es zu mikrobiellen Prozessen, die zu geschmacklichen Beeinträchtigungen der später aus diesen Rohkaffeebohnen hergestellten (entkoffeinierten) Zubereitungen führen können. Auf dem Gebiet der vorliegenden Erfindung besteht daher ein Bedarf, diese mikrobiellen Prozesse zu minimieren.

EP 0 313 921 A2 offenbart ein Verfahren zum schonenden Entkoffeinieren von Rohkaffee, gekennzeichnet im Wesentlichen durch die Verfahrensschritte a) Vorquellen des Rohkaffees mit zugeführter Quellflüssigkeit; b) Extrahieren des Koffeins mit einer wässrigen Lösung; c) Adsorption des Koffeins an einem vorbehandelten Adsorptionsmittel; d) Trocknen der entkoffeinierten Bohnen auf den ursprünglichen Feuchtigkeitsgehalt, wobei mindestens einer der Verfahrensschritte unter Ausschluss von Sauerstoff, insbesondere in Inertgasatmosphäre, durchgeführt wird.

Das Fachbuch "The Craft and Science ofCoffee", Elsevier, 2017, ISBN 978-0-12-803520-7, editiert von Britta Vollmer beschreibt diverse Aspekte des Kaffeeanbaus und der Kaffeeverarbeitung. Insbesondere beschreibt das Fachbuch in Kapitel 10 ausführlich den Stand der Technik hinsichtlich des Entkoffeinierens von Kaffee.

US 5 443 709 A offenbart eine Vorrichtung zum Abtrennen von Koffein aus einer Flüssigkeit.

US 4 911 941 A offenbart ein Verfahren zum Entkoffeinieren von Kaffee.

US 8 067 216 B2 offenbart ein Verfahren sowie eine Anlage zur Mazeration biologischen Materials in einem Elektroporations-Reaktor.

In der Kaffeeindustrie besteht ein Bedarf, (i) Rohkaffeebohnen mit einer niedrigen Bakterienbelastung einzusetzen bzw. (ii) die vorhandene Bakterienbelastung von Rohkaffeebohnen während der Verarbeitung zu reduzieren.

In der Kaffeeindustrie wird generell gewünscht, die Feuchte von vorgequollenen Rohkaffeebohnen nach dem Extrahieren von Koffein wieder auf eine zur Weiterverarbeitung bevorzugte Feuchte, insbesondere auf eine Feuchte von 8 bis 13 Gew.-%, bezogen auf die Gesamtmasse der Rohkaffeebohnen, zu reduzieren und dabei möglichst wenig Energie aufzuwenden. Insbesondere wird gewünscht, die Feuchte von vorgequollenen Rohkaffeebohnen nach dem Extrahieren von Koffein wieder auf eine zur Weiterverarbeitung bevorzugte Feuchte, insbesondere auf eine Feuchte von 8 bis 13 %, zu reduzieren und dabei möglichst geringe Temperaturen einzusetzen, bevorzugt um eine Schonung von Geschmacksstoffen während des Trocknungsprozesses zu erreichen. Außerdem wird generell gewünscht, die Feuchte von vorgequollenen Rohkaffeebohnen nach dem Extrahieren von Koffein wieder auf eine zur Weiterverarbeitung bevorzugte Feuchte, insbesondere auf eine Feuchte von 8 bis 13 %, durch Trocknen zu reduzieren und dabei möglichst kurze Trocknungsdauern zu verwenden, z. B. um so eine vorteilhafte Schonung von Geschmacksstoffen während des Trocknungsprozesses zu erreichen.

In der Kaffeeindustrie wird angestrebt, einen möglichst hohen Massenfluss an Rohkaffeebohnen in Anlagen zum Vorquellen von Rohkaffeebohnen, zur Entkoffeinierung von Rohkaffeebohnen und zur Trocknung von (entkoffeinierten) Rohkaffeebohnen zu erreichen, ohne dabei die Qualität der resultierenden Produkte des jeweiligen Prozesses und/oder der aus ihnen herstellbaren oder der aus ihnen hergestellten Kaffeezubereitungen nachteilig zu beeinflussen.

In der Kaffeeindustrie ist es generell gewünscht, Rohkaffeebohnen mit Extraktionsmitteln zu entkoffeinieren, bevorzugt mit Extraktionsmitteln die eine hohe Spezifität für Koffein besitzen, und dabei möglichst wenig Energie zu verbrauchen. Zudem ist es generell gewünscht, Rohkaffeebohnen mit Extraktionsmitteln zu entkoffeinieren, bevorzugt mit Extraktionsmitteln die eine hohe Spezifität für Koffein besitzen, und dabei möglichst kurze Extraktionszeiten verwenden zu können. Hierbei sollen jeweils bevorzugt niedrige Koffeinwerte in der extrahierten Rohkaffeebohne resultieren.

Die vorliegende Erfindung wird in den Ansprüchen definiert und nachfolgend detailliert beschrieben.

Die vorliegende Erfindung betrifft
- ein Verfahren zum Herstellen von entkoffeinierten Rohkaffeebohnen, entkoffeinierten gerösteten Kaffeebohnen oder daraus hergestellten Zubereitungen,
- entkoffeinierte Rohkaffeebohnen, entkoffeinierte geröstete Kaffeebohnen sowie daraus hergestellte Zubereitungen,
- die Verwendung einer PEF-Vorrichtung zur Behandlung von Rohkaffeebohnen und
- eine Anlage zum Entkoffeinieren von Rohkaffeebohnen.

Besondere Ausführungsformen, Aspekte oder Eigenschaften, die im Zusammenhang mit einer dieser Kategorien beschrieben oder als bevorzugt beschrieben werden, gelten jeweils entsprechend bzw. sinngemäß auch für die jeweils anderen Kategorien, und umgekehrt.

Sofern nicht anders angegeben, lassen sich bevorzugte Aspekte oder Ausführungsformen der Erfindung und ihrer verschiedenen Kategorien mit anderen Aspekten oder Ausführungsformen der Erfindung und ihrer verschiedenen Kategorien kombinieren, insbesondere mit anderen bevorzugten Aspekten oder Ausführungsformen. Kombinationen von jeweils bevorzugten Aspekten oder Ausführungsformen miteinander ergeben jeweils wieder bevorzugte Aspekte oder Ausführungsformen der Erfindung.

Gemäß einem primären Aspekt der vorliegenden Erfindung werden die vorstehend angegebenen Aufgaben- und Problemstellungen ganz oder teilweise gelöst durch ein Verfahren zum Herstellen von entkoffeinierten Rohkaffeebohnen, entkoffeinierten gerösteten Kaffeebohnen oder daraus hergestellten Zubereitungen, mit folgenden Schritten:
(b) PEF-Behandeln von Rohkaffeebohnen (vorgequollen oder nicht vorgequollen), so dass PEF-behandelte (vorgequollene oder nicht vorgequollene) Rohkaffeebohnen resultieren,
(c) Extrahieren von Koffein aus den PEF-behandelten Rohkaffeebohnen mittels einer Extraktionsflüssigkeit, so dass entkoffeinierte, PEF-behandelte Rohkaffeebohnen resultieren.

Das Verfahren umfasst die angegebenen Schritte, jedoch können vor, nach oder zwischen diesen Schritten weitere Verfahrensschritte durchgeführt werden. Der Fachmann wählt solche zusätzlichen Schritte und/oder Zwischenschritte nach den Erfordernissen des Einzelfalls selbst aus.

Die "entkoffeinierten gerösteten Rohkaffeebohnen" sind ein Produkt oder (sekundäres) Zwischenprodukt, zu dessen Herstellung entkoffeinierte Rohkaffeebohnen (als primäres Zwischenprodukt) eingesetzt werden.

Die "daraus hergestellten Zubereitungen" sind Produkte, zu deren Herstellung im erfindungsgemäßen Verfahren hergestellte entkoffeinierte Rohkaffeebohnen und/oder entkoffeinierte geröstete Rohkaffeebohnen eingesetzt werden. Die "daraus hergestellten Zubereitungen" umfassen insbesondere Lebensmittel und Genussmittel. Der Begriff "daraus hergestellte Zubereitungen" umfasst daher (neben vielen anderen Kaffeezubereitungen) insbesondere auch: Espresso, Ristretto, Bica, Lungo, Americano, Long black, Café Latte, Caffè breve, Caffè macchiato, Cappuccino, Flat white, Galäo, Latte macchiato, Mocha, Café con leche, Cortado, Filterkaffee, Brühkaffee, mit einem Perkolator zubereiteten Kaffee, Vakuum gebrühten Kaffee, French-press zubereiteten Kaffee, Cold brew coffee, White coffee, Café au lait, Kopi tubruk, Indian filter coffee, Greek coffee, Turkish coffee, Tinto, Indochinese-style coffee, Grünen Kaffee, Kaffeepulver, Instantkaffee, mit Kaffee versetzte Schokolade, Schokoladen-umhüllte geröstete Kaffeebohnen, sowie Mischungen einer oder mehrerer dieser Zubereitungen und/oder Mischungen einer oder mehrerer dieser Zubereitungen mit weiteren Zutaten.

Unter den Begriff "Entkoffeinieren" wird im vorliegenden Text ein Reduzieren des Koffeingehalts verstanden. Eine Rohkaffeebohne besitzt somit nach dem Entkoffeinieren einen niedrigeren Koffeingehalt als vor dem Entkoffeinieren.

Der Begriff "Rohkaffeebohne" bezeichnet Kaffeebohnen, deren Fruchthaut und Fruchtfleisch (die sogenannte "Pulpe") sowie deren Pergamenthäutchen und der darauf befindliche Schleim entfernt wurden. Erfindungsgemäß können beliebige Rohkaffeebohnen eingesetzt werden (Coffea Arabica, Coffea Canephora var. Robusta und andere). Rohkaffeebohnen können vorgequollen oder nicht vorgequollen sein. In bevorzugten Ausgestaltungen des erfindungsgemäßen Verfahrens werden die der PEF-Behandlung zu unterziehenden Rohkaffeebohnen zuvor vorgequollen und/oder auf einen bestimmten Feuchtegehalt eingestellt, vgl. dazu die detaillierten Ausführungen weiter unten.

Der Begriff "Kaffeebohne" umfasst (i) (nicht vorgequollene) Rohkaffeebohnen, (ii) vorgequollene Rohkaffeebohnen, (iii) PEF-behandelte Rohkaffeebohnen, (iv) PEF-behandelte, vorgequollene Rohkaffeebohnen, (v) entkoffeinierte, PEF-behandelte Rohkaffeebohnen, (vi) entkoffeinierte, PEF-behandelte, vorgequollene Rohkaffeebohnen, (vii) PEF-behandelte, getrocknete, entkoffeinierte Rohkaffeebohnen sowie (viii) geröstete, PEF-behandelte, getrocknete, entkoffeinierte Kaffeebohnen.

"PEF-Behandeln" von Rohkaffeebohnen bedeutet, dass die (gegebenenfalls vorgequollenen) Rohkaffeebohnen einem gepulsten elektrischen Feld (engl.: pulsed electric field) ausgesetzt werden.

Vorzugsweise führt im erfindungsgemäßen Verfahren das PEF-Behandeln von Rohkaffeebohnen zu Veränderungen an Zellwänden und Zellmembranen in den Rohkaffeebohnen. Besonders bevorzugt bestehen diese Veränderungen darin, dass die Zellwände und Zellmembranen perforiert werden. Diese Veränderungen sind vorzugsweise mittels Rasterelektronenmikroskopie (REM), Tranmissionselektronenmikroskopie (TEM), Kryo-Transmissionselektronenmikroskopie (Kryo-TEM) oder Rasterkraftmikroskopie (Atomic Force Microscopy, AFM) oder mittels einer Kombination der genannten Methoden detektierbar.

Üblicherweise werden die im erfindungsgemäßen Verfahren resultierenden entkoffeinierten, PEF-behandelten, gegebenenfalls vorgequollenen Rohkaffeebohnen in mehreren Folgeschritten weiterverarbeitet. In vielen dieser Folgeschritte ist die mechanische Stabilität der entkoffeinierten, PEF-behandelten Rohkaffeebohnen von Bedeutung. So ist es beispielsweise unerwünscht, dass die entkoffeinierten PEF-behandelten Rohkaffeebohnen beim Trocknen zerbrechen oder sonstwie mechanisch beeinträchtigt werden; die erforderliche Stabilität lässt sich in der Praxis ohne Weiteres gewährleisten.

Bevorzugt weisen die getrockneten entkoffeinierten PEF-behandelten Rohkaffeebohnen eine besonders hohe Stabilität auf, um auch für weitere Verarbeitungsschritte wie Umfüllen, Transport und den Röstprozess besonders gut geeignet zu sein.

Der Fachmann wird die PEF-Behandlung in Schritt (b) bzw. in Schritt (b-v) im industriellen Maßstab routinemäßig so ausführen, dass das Bruchverhalten der resultierenden getrockneten entkoffeinierten PEF-behandelten Rohkaffeebohnen nicht beeinträchtigt, vorzugsweise sogar verbessert wird, verglichen mit (gegebenenfalls vorgequollenen) Rohkaffeebohnen, die bei ansonsten identischer Behandlung den Schritt (b) (PEF-Behandeln) bzw. den Schritt (b-v) (PEF-Behandeln vorgequollener Rohkaffeebohnen) nicht durchlaufen haben. Vorzugsweise wird das Bruchverhalten durch eine, aus der PEF-Behandlung resultierende, Erhöhung der Elastizität verbessert. Das Bruchverhalten von Rohkaffeebohnen bzw. von Kaffeebohnen wird vorzugsweise bestimmt nach der durch Nedomová, Trnka, Stoklasovä und Buchar in dem Fachartikel "Strength of coffee beans under static and dynamic loading", 2013 (doi:10.11118/actaun201361030743), auf Seite 745 beschriebenen "dynamic loading" Methode. In vielen Fällen ist es bevorzugt, dass die Werte für die Bruchkraft (engl. Breaking force) und/oder die Bruchdehnung (engl. Strain at fracture) durch die PEF-Behandlung in Schritt (b) bzw. in Schritt (b-v) des erfindungsgemäßen Verfahrens um mehr als 5% erhöht werden, besonders bevorzugt um mehr als 7%, ganz besonders bevorzugt um mehr als 10%. Verglichen wird hierbei folglich mit Rohkaffeebohnen, die bei ansonsten identischer Behandlung den Schritt (b) (PEF-Behandeln) bzw. den Schritt (b-v) (PEF-Behandeln vorgequollener Rohkaffeebohnen) nicht durchlaufen haben.

Um den Verfahrensaufwand beim Entkoffeinieren von Rohkaffeebohnen (insbesondere mit für Koffein spezifischen Extraktionsmitteln, wie flüssiges Kohlenstoffdioxid) zu reduzieren, haben die Erfinder eine Vielzahl von Überlegungen angestellt und Untersuchungen durchgeführt.

Da den Erfindern bewusst war, dass der Schritt der Extraktion des Koffeins für das Gesamtverfahren geschwindigkeitsbestimmend ist, versuchten sie zunächst die Parameter der Verfahrensführung im Schritt des Extrahierens des Koffeins zu optimieren. Dieser Ansatz erwies sich jedoch trotz intensiver Bemühungen bislang nicht als erfolgreich. Auch Versuche, ein alternatives Extraktionsmittel zu finden, welches bei hoher Spezifizität eine schnellere Koffeinextraktion ermöglicht als die in der Kaffeeindustrie bekannten, für Koffein spezifischen Extraktionsmittel (wie flüssiges Kohlenstoffdioxid) waren bislang nicht erfolgreich.

Schließlich setzte sich daher die (vorläufige) Erkenntnis durch, dass der eigentliche Extraktionsprozess wohl nicht zu optimieren ist.

Die Erfinder haben daher erwogen, den üblichen Schritt des Vorquellens der Rohkaffeebohnen vor dem Extraktionsprozess zu modifizieren oder durch andere Verfahren zu ersetzen, um so eine andere, effizientere Form der Vorbereitung der Extraktion zu finden.

Eine Vielzahl von Versuchen mit unterschiedlichsten Ansätzen und Methoden verlief zunächst enttäuschend.

Überraschenderweise wurde in weiteren Versuchen jedoch gefunden, dass eine vorherige PEF-Behandlung zu einer erheblichen und letztlich entscheidenden Verbesserung der Effizienz der Koffeinextraktion aus den so vorbehandelten Rohkaffeebohnen führte. Eine derartig effiziente Extraktion lässt sich ohne eine PEF-Behandlung nicht erreichen.

Zudem stellte sich überraschenderweise heraus, dass die so behandelten (zunächst PEF-behandelten, dann entkoffeinierten) Rohkaffeebohnen in bestimmten Trocknungsverfahren, insbesondere in der Wirbelschichttrocknung, effektiver getrocknet werden als vergleichbare Rohkaffeebohnen, die bei ansonsten identischer Behandlung den Schritt der PEF-Behandlung nicht durchlaufen hatten.

Weiterhin wurde in eigenen Experimenten überraschenderweise festgestellt, dass die Bruchfestigkeit der Rohkaffeebohnen durch die PEF-Behandlung vor der Entkoffeinierung nicht beeinträchtigt, sondern sogar leicht erhöht wird.

Eigene Untersuchungen haben überdies gezeigt, dass auch der Geschmack und das Aroma entsprechender Kaffeezubereitungen durch die PEF-Behandlung nicht negativ beeinflusst wird.

PEF-Behandlungen von Lebensmitteln sind vereinzelt bereits beschrieben worden:
EP 2 544 552 B1 offenbart ein Verfahren zur Behandlung von Chicoréestücken, das einen Schritt des Einweichens von nichtgerösteten Chicoréestücken in einer wässrigen Lösung aufweist, die zweiwertige Kationen aufweist, gefolgt von einem Schritt des Dünstens der Chicoréestücke. Das Dokument offenbart zudem, dass während des Schrittes des Einweichens ein gepulstes elektrisches Feld auf die Chicoräestücke angewendet wird.

Das Dokument US 2016/0037807 A1 offenbart eine Methode zur Reduzierung des Asparagingehalts von Lebensmitteln die für eine Hitzebehandlung vorgesehen sind. Das Dokument offenbart zudem, dass Kartoffelstücke vor einem Einweichen in Wasser mit einem gepulsten elektrischen Feld behandelt werden.

Das Dokument EP 1 906 772 B1 offenbart ein Verfahren zum Behandeln von Kartoffeln, umfassend das Anwenden eines elektrischen Feldes in der Form eines gepulsten elektrischen Feldes auf die Kartoffeln.

Die Dissertationsschrift "Pulsed electric fields - Influence on physiology, structure and extraction processes of the oleaginous yeast Waltomyces lipofer" des Autors Dennis Raschke, Technische Universität Berlin, 2010, offenbart den Einfluss gepulster elektrischer Felder auf Hefezellen vom Typ Waltomyces lipofer.

Das Dokument "DLG-Expertenwissen 5/2018" beschreibt die Anwendung von gepulsten elektrischen Feldern (PEF) in der Lebensmittelindustrie.

Das Dokument "Pulsed Electric Field Assisted Extraction of Bioactive Compounds from Cocoa Bean Shell and Coffee Silverskin" der Autoren Letricia Barbosa-Pereira, Alessandro Guglielmetti und Giuseppe Zeppa (in: "Food and Bioprocess Technology" 2008, vol. 11, Seiten 818-835; https://doi.org/10.1007/s11947-017-2045-6) offenbart die Extraktion bioaktiver Substanzen aus zuvor zu einem Pulver zermahlenen Kaffeesilberhäutchen. Das Dokument offenbart auch, dass eine der extrahierten bioaktiven Substanzen Koffein ist. Offenbart wird zudem, dass die zu einem Pulver zermahlenen Kaffeesilberhäutchen vor der Extraktion einem gepulsten elektrischen Feld ausgesetzt werden.

Auf Basis seines Fachwissens wählt der Fachmann für das erfindungsgemäße Verfahren eine geeignete Extraktionsflüssigkeit individuell aus.

Bevorzugt ist ein erfindungsgemäßes Verfahren (wie vorstehend beschrieben, vorzugsweise wie vorstehend als bevorzugt bezeichnet) mit folgenden Schritten:
(a-v) Vorquellen von Rohkaffeebohnen mit Quellflüssigkeit, so dass vorgequollene Rohkaffeebohnen resultieren, vorzugsweise vorgequollene Rohkaffeebohnen mit einem vorbestimmten Feuchtegehalt,
(b-v) PEF-Behandeln der vorgequollenen Rohkaffeebohnen, so dass PEF-behandelte, vorgequollene Rohkaffeebohnen resultieren,
(c-v) Extrahieren von Koffein aus den PEF-behandelten, vorgequollenen Rohkaffeebohnen, mittels einer Extraktionsflüssigkeit, so dass entkoffeinierte, PEF-behandelte, vorgequollene Rohkaffeebohnen resultieren.

Der Begriff "Quellflüssigkeit" bezeichnet eine Substanz, die bei 25°C und einem Umgebungsdruck von 101325 Pa als Flüssigkeit vorliegt und die dazu vorgesehen ist bzw. benutzt wird, in einen Festkörper (z. B. in eine Rohkaffeebohne) einzudringen und (häufig) eine Volumenvergrößerung des Festkörpers (z. B. einer Rohkaffeebohne) zu bewirken. Eine Rohkaffeebohne besitzt somit nach dem Vorquellen mit Quellflüssigkeit häufig ein größeres Volumen als vor dem Vorquellen mit Quellflüssigkeit.

Der Feuchtegehalt von Rohkaffeebohnen kann über einen weiten Bereich variieren. Das Ergebnis des Schrittes (a-v) ist eine vorgequollene Rohkaffeebohne.

"Vorgequollen" ist eine Rohkaffeebohne dann, wenn sie mit Quellflüssigkeit kontaktiert wurde und zumindest ein Teil der Quellflüssigkeit in die Rohkaffeebohne eingedrungen ist; dies lässt sich z.B. durch Differenzwägung bestätigen. Eine vorgequollene Rohkaffeebohne besitzt vorzugsweise ein vergrößertes Volumen.

Vorzugsweise besitzt eine in Schritt (b) bzw. (b-v) einer PEF-Behandlung zu unterziehende Rohkaffeebohne einen Feuchtegehalt von zumindest 15 Gew.-%, bevorzugt einen Feuchtegehalt im Bereich von 15 Gew.-% bis 55 Gew.-%, besonders bevorzugt einen Feuchtegehalt im Bereich von 35 Gew.-% bis 50 Gew.-%, ganz besonders bevorzugt einen Feuchtegehalt im Bereich von 35 Gew.-% bis 45 Gew.-%, jeweils bezogen auf die Gesamtmasse der vorgequollenen Rohkaffeebohne bestimmt gemäß ISO 6673.

Bevorzugt ist ein erfindungsgemäßes Verfahren (wie vorstehend beschrieben, vorzugsweise wie vorstehend als bevorzugt bezeichnet), wobei die Quellflüssigkeit eine wässrige Quellflüssigkeit ist.

Auf Basis seines Fachwissens und der Bedürfnisse des Einzelfalls wählt der Fachmann die im erfindungsgemäßen Verfahren verwendete Quellflüssigkeit individuell aus. In vielen Fällen ist es jedoch besonders bevorzugt, eine wässrige Quellflüssigkeit zu verwenden. Der vielfach bevorzugt eingesetzte Wasserdampf ist gemäß obiger Definition eine wässrige Quellflüssigkeit.

In vielen Fällen ist als Quellflüssigkeit eine wässrige Quellflüssigkeit bevorzugt, da es zu einem besonders effektiven Vorquellen der Rohkaffeebohnen kommt; gleichzeitig ist der Einsatz einer wässrigen Quellflüssigkeit in vielen Fällen umweltschonend und/oder besonders kosteneffizient.

In vielen Fällen ist es bevorzugt, Wasser (Trinkwasser im Sinne der deutschen Trinkwasserverordnung in der Fassung mit Datum vom 8. Januar 2018 (veröffentlicht im Bundesgesetzblatt, entmineralisiertes Wasser, destilliertes Wasser oder dergleichen) bzw. Wasserdampf ohne die Zugabe weiterer Substanzen als wässrige Quellflüssigkeit einzusetzen. In diesem Fall verbleiben bei einem späteren Entfernen der Quellflüssigkeit (d.h. des Wassers) keine relevanten Mengen an unerwünschten Additiven in der Kaffeebohne. Es ist daher keine gesonderte Analytik zur Überwachung toxikologischer bzw. lebensmittelrechtlicher Grenzwerte notwendig.

Bevorzugt ist ein erfindungsgemäßes Verfahren (wie vorstehend beschrieben, vorzugsweise wie vorstehend als bevorzugt bezeichnet), wobei die Extraktionsflüssigkeit ausgewählt ist aus der Gruppe bestehend aus:
- flüssigem Kohlenstoffdioxid, überkritischem Kohlenstoffdioxid, Dichlormethan, Dichlorethan, Ethanol, Trichlomethan, Trichlorethan, Aceton, Ethylacetat, Methylacetat, Methanol, Kaffeeöl und Wasser,

Die Extraktionsflüssigkeit ist besonders bevorzugt ausgewählt aus der Gruppe bestehend aus:
- Wasser, Ethylacetat, flüssigem Kohlenstoffdioxid, überkritischem Kohlenstoffdioxid und Dichlormethan

Die Extraktionsflüssigkeit ist ganz besonders bevorzugt ausgewählt aus der Gruppe bestehend aus:
- flüssigem Kohlenstoffdioxid und Dichlormethan.

Am meisten bevorzugt ist die Extraktionsflüssigkeit flüssiges Kohlenstoffdioxid.

Auch andere als die hier aufgeführten bevorzugten Extraktionsmittel und Extraktionsmittelgemische können erfindungsgemäß eingesetzt werden, ihr Einsatz ist lediglich in der Regel weniger bevorzugt.

Jede der angegebenen Extraktionsflüssigkeiten kann je nach den Erfordernissen des Einzelfalls hinsichtlich ihres Lösungsverhaltens für Koffein und spezielle Aromastoffe im Einzelfall durch den Fachmann bevorzugt werden. Der Fachmann berücksichtigt bei der Auswahl neben dem Lösungsverhalten des jeweiligen Extraktionsmittels auch andere Faktoren des Einzelfalls und deren Kombinationen bei der Auswahl des geeigneten Extraktionsmittels; diese Faktoren umfassen beispielhaft und nicht abschließend: spezifische Anforderungen an das Extraktionsergebnis, die Extraktionstemperatur, den apparativen Aufbau im Einzelfall, rechtliche Vorschriften am Ort seiner Tätigkeit, Kosten und/oder Verfügbarkeit des Extraktionsmittels, Umweltverträglichkeit, Kundenakzeptanz.

Besonders bevorzugt ist die Extraktionsflüssigkeit ausgewählt aus der Gruppe bestehend aus flüssigem Kohlenstoffdioxid und Dichlormethan. Ganz besonders bevorzugt ist die Verwendung von flüssigem Kohlenstoffdioxid als Extraktionsflüssigkeit.

Bevorzugt ist ein erfindungsgemäßes Verfahren (wie vorstehend beschrieben, vorzugsweise wie vorstehend als bevorzugt bezeichnet), mit folgendem zusätzlichen Schritt:
(d) Trocknen der entkoffeinierten, PEF-behandelten Rohkaffeebohnen, vorzugsweise von entkoffeinierten, PEF-behandelten, vorgequollenen Rohkaffeebohnen (insbesondere bei Durchführung der Schritte (a-v), (b-v) und (c-v)), so dass getrocknete entkoffeinierte Rohkaffeebohnen resultieren, vorzugsweise getrocknete entkoffeinierte Rohkaffeebohnen mit einem vorbestimmten Feuchtegehalt.

Nach dem Entkoffeinieren ist es nämlich in vielen Fällen erforderlich oder zumindest bevorzugt, die entkoffeinierten, PEF-behandelten, gegebenenfalls vorgequollenen Rohkaffeebohnen zu trocknen, sodass getrocknete entkoffeinierte, gegebenenfalls vorgequollene, PEF-behandelte Rohkaffeebohnen resultieren, vorzugsweise getrocknete entkoffeinierte Rohkaffeebohnen mit einem vorbestimmten Feuchtegehalt.

Vorzugsweise wird der Feuchtigkeitsgehalt der entkoffeinierten, PEF-behandelten, gegebenenfalls vorgequollenen Rohkaffeebohnen im Schritt des "Trocknens der entkoffeinierten, PEF-behandelten Rohkaffeebohnen" um mindestens 10 % reduziert, bezogen auf die Gesamtmasse der Rohkaffeebohnen vor dem Trocknen, bevorzugt um mindestens 20 %, besonderes bevorzugt um mindestens 30 %, ganz besonders bevorzugt um mindestens 35 %; die Bestimmung erfolgt gemäß ISO 6673.

Vorzugsweise wird die Schüttdichte (engl.: bulk density) der entkoffeinierten, PEF-behandelten, gegebenenfalls vorgequollenen Rohkaffeebohnen im Schritt des "Trocknens der entkoffeinierten, PEF-behandelten Rohkaffeebohnen", um mindestens 10 % erhöht, bevorzugt um mindestens 20 %, besonders bevorzugt um 30 %, ganz besonders bevorzugt um mindestens 35 %; die Bestimmung der Schüttdichte (freie Strömung) erfolgt gemäß ISO 6669.

Vorteilhafterweise ist eine definierte Reduzierung des Feuchtigkeitsgehalts (bestimmt gemäß ISO 6673) der entkoffeinierten, PEF-behandelten, gegebenenfalls vorgequollenen Rohkaffeebohnen, im Schritt des "Trocknens der entkoffeinierten, PEF-behandelten Rohkaffeebohnen" mit einem geringeren Energieaufwand bzw. Energieeinsatz möglich als die gleiche definierte Reduzierung des Feuchtigkeitsgehalts bei dergleichen Menge entkoffeinierter, nicht PEF-behandelter, gegebenenfalls vorgequollener Rohkaffeebohnen (bei mit Ausnahme der PEF-Behandlung identischer Verfahrensgestaltung).

Bevorzugt ist ein erfindungsgemäßes Verfahren (wie vorstehend beschrieben, vorzugsweise wie vorstehend als bevorzugt bezeichnet), wobei das Trocknen der entkoffeinierten, PEF-behandelten Rohkaffeebohnen, vorzugsweise das Trocknen der entkoffeinierten, PEF-behandelten, vorgequollenen Rohkaffeebohnen (also insbesondere bei Durchführung der Schritte (a-v), (b-v) und (c-v)), mittels eines Verfahrens durchgeführt wird, welches ausgewählt ist aus der Gruppe bestehend aus:
- Wirbelschichtverfahren, Vakuumtrocknungsverfahren, Vibrationstrocknung, Gefriertrocknung, Heißlufttrocknung, Mikrowellentrocknung, Infrarottrocknung und Kombinationen davon.

Vorzugsweise ist es ausgewählt aus der Gruppe bestehend aus:
- Wirbelschichtverfahren, Vakuumtrocknungsverfahren und Kombinationen davon,
   wobei bevorzugt das Trocknungsverfahren zumindest eine Wirbelschichttrocknung umfasst, besonders bevorzugt in Kombination mit einer Vakuumtrocknung,
      und
   wobei ganz besonders bevorzugt zunächst eine Vakuumtrocknung erfolgt und danach eine Wirbelschichttrocknung.

Auch andere als die hier aufgeführten Trocknungsverfahren können erfindungsgemäß eingesetzt werden, ihr Einsatz ist lediglich in der Regel weniger bevorzugt. Der Fachmann wählt ein für die Erfordernisse des Einzelfalls geeignetes Trocknungsverfahren aus.

Weitere geeignete Verfahren zum Trocknen der entkoffeinierten, PEF-behandelten Rohkaffeebohnen, vorzugsweise der entkoffeinierten, PEF-behandelten, vorgequollenen Rohkaffeebohnen, sind aus dem Stand der Technik bekannt und können einzeln oder kombiniert bzw. auch nacheinander ebenfalls erfindungsgemäß zum Einsatz kommen, alternativ oder zusätzlich zu den bevorzugten Trocknungsverfahren.

Der Fachmann kennt weitere geeignete Verfahren zur Trocknung aus dem Stand der Technik und wählt das geeignete Verfahren bzw. die geeigneten Verfahren nach den Erfordernissen des Einzelfalles selbst aus.

Besonders bevorzugt erfolgt in vielen Fällen zunächst eine Vakuumtrocknung zum Vortrocknen auf eine Feuchte von ca. 20 bis 30 % (bezogen auf die Gesamtmasse der Kaffeebohnen, Bestimmung gemäß ISO 6673) und danach eine Wirbelschichttrocknung, weil durch die Verwendung der entkoffeinierten, PEF-behandelten Rohkaffeebohnen bzw. der entkoffeinierten, PEF-behandelten, vorgequollenen Rohkaffeebohnen insbesondere in der Wirbelschichttrocknung besonders vorteilhaft verbesserte Trocknungsraten erzielt werden, verglichen mit entkoffeinierten, nicht PEF-behandelten Rohkaffeebohnen bzw. entkoffeinierten, nicht PEF-behandelten, vorgequollenen Rohkaffeebohnen.

Bevorzugt ist ein erfindungsgemäßes Verfahren (wie vorstehend beschrieben, vorzugsweise wie vorstehend als bevorzugt bezeichnet), wobei durch die PEF-Behandlung irreversible Poren in den Zellmembranen und Zellwänden der Rohkaffeebohnen (vorgequollen oder nicht vorgequollen) erzeugt werden.

Vorzugsweise wird im erfindungsgemäßen Verfahren das PEF-Behandeln von Rohkaffeebohnen so schonend durchgeführt, dass irreversible Poren in den Zellmembranen und Zellwänden der Rohkaffeebohnen entstehen, aber ohne dass die Bruchfestigkeit der daraus hergestellten gerösteten Kaffeebohnen beeinträchtigt wird, jeweils verglichen mit gerösteten Kaffeebohnen der gleichen Art und Charge, die zuvor die gleichen Verfahrensschritte durchlaufen haben, lediglich ohne eine PEF-Behandlung. Die Bruchfestigkeit (Bruchkraft) wird jeweils bestimmt mittels der durch Nedomová, Trnka, Stoklasovä und Buchar in dem Fachartikel "Strength of coffee beans under static and dynamic loading", 2013 (doi:10.11118/actaun201361030743), auf Seite 745 beschriebenen "dynamic loading" Methode.

In vielen Fällen ist es auch hier bevorzugt, dass die Werte für Bruchkraft (engl. Breaking force) und/oder die Bruchdehnung (engl. Strain at fracture) durch die PEF-Behandlung in Schritt (b) bzw. in Schritt (b-v) des erfindungsgemäßen Verfahrens um mehr als 5% erhöht werden, besonders bevorzugt um mehr als 7%, ganz besonders bevorzugt um mehr als 10%. Verglichen wird hierbei folglich mit Rohkaffeebohnen, die bei ansonsten identischer Behandlung den Schritt (b) (PEF-Behandeln) bzw. den Schritt (b-v) (PEF-Behandeln) nicht durchlaufen haben.

Vorzugsweise wird das PEF-Behandeln von (gegebenenfalls vorgequollenen) Rohkaffeebohnen so schonend durchgeführt, dass irreversible Poren in den Zellmembranen und Zellwänden der Rohkaffeebohnen entstehen, aber ohne dass das Röstverhalten der PEF-behandelten Rohkaffeebohnen beeinträchtigt wird, verglichen mit gerösteten Kaffeebohnen der gleichen Art und Charge, die zuvor die gleichen Verfahrensschritte durchlaufen haben, lediglich ohne eine PEF-Behandlung.

Die durch das PEF-Behandeln von Rohkaffeebohnen erzeugten irreversiblen Poren in den Zellmembranen und Zellwänden der Rohkaffeebohnen lassen sich detektieren mittels Rasterelektronenmikroskopie (REM), Tranmissionselektronenmikroskopie (TEM), Kryo-Transmissionselektronenmikroskopie (Kryo-TEM) oder Rasterkraftmikroskopie (Atomic Force Microscopy, AFM) oder besonders bevorzugt mittels einer Kombination der genannten Methoden.

Bevorzugt ist ein erfindungsgemäßes Verfahren (wie vorstehend beschrieben, vorzugsweise wie vorstehend als bevorzugt bezeichnet), wobei die Rohkaffeebohnen, vorzugsweise die vorgequollenen Rohkaffeebohnen, nach der PEF-Behandlung eine geringere Menge an coliformen Keimen aufweisen als vor der PEF-Behandlung, jeweils bestimmt gemäß ISO 4832.

Der Begriff "coliforme Keime" bezeichnet lactosespaltende, gram-negative, fakultativ anaerobe, stäbchenförmige Bakterien, die Säure und Gase produzieren; Beispiele für solche coliformen Bakterien sind die Gattungen Citrobacter, Enterobacter, Escherichia und Klebsiella.

Die Belastung von Rohkaffeebohnen (vorgequollen oder nicht-vorgequollen) mit coliformen Keimen ist unerwünscht und eine möglichst niedrige Belastung der Rohkaffeebohnen (vorgequollen oder nicht-vorgequollen) mit coliformen Keimen ist daher bevorzugt.

Bevorzugt wird das erfindungsgemäße Verfahren so durchgeführt, dass die Menge der coliformen Keime auf den gegebenenfalls vorgequollenen Rohkaffeebohnen nach der PEF-Behandlung niedriger ist als unmittelbar vor der PEF-Behandlung, jeweils bestimmt anhand der Menge an koloniebildenden Einheiten (kbE) ermittelt gemäß DIN EN ISO 4833-1.

Bevorzugt liegt die Menge der coliformen Keime auf den Rohkaffeebohnen, vorzugsweise den vorgequollenen Rohkaffeebohnen, nach der PEF-Behandlung unterhalb von 150 kbE, besonders bevorzugt unterhalb von 140 kbE, ganz besonders bevorzugt unterhalb von 135 kbE, am meisten bevorzugt unterhalb von 130 kbE, ermittelt gemäß DIN EN ISO 4833-1.

Die Erfindung betrifft auch ein Verfahren (wie vorstehend beschrieben, vorzugsweise wie vorstehend als bevorzugt bezeichnet), wobei beim PEF-Behandeln der Rohkaffeebohnen in Schritt (b) bzw. der vorgequollenen Rohkaffeebohnen in Schritt (b-v)
- eine Puls-Feldstärke von mindestens 0,2 kV/cm, bevorzugt mindestens 1,0 kV/cm, besonders bevorzugt mindestens 1,5 kV/cm, ganz besonders bevorzugt mindestens 2,7 kV/cm, am meisten bevorzugt eine Puls-Feldstärke im Bereich von 0,5 kV/cm bis 3 kV/cm angewendet wird,
   und/oder
- ein tatsächlicher Energieeintrag von mindestens 5 kJ/L, bevorzugt mindestens 15,0 kJ/L erfolgt,
   und/oder
- die Rohkaffeebohne mindestens 5 Pulsen des gepulsten elektrischen Feldes ausgesetzt wird, bevorzugt mindestens 10 Pulsen, besonders bevorzugt mindestens 18 Pulsen, ganz besonders bevorzugt mindestens 20 Pulsen, am meisten bevorzugt mindestens 25 Pulsen, vorzugsweise im Bereich von 5 bis 100 Pulsen, besonders vorzugsweise im Bereich von 5 bis 50 Pulsen,
   und/oder
- die Rohkaffeebohnen zumindest anfänglich (also vor dem ersten Puls des elektrischen Feldes) einen Feuchtegehalt von mindestens 10% besitzen, bevorzugt mindestens 20% besonders bevorzugt mindestens 30%, ganz besonders bevorzugt mindestens 40%, vorzugsweise einen Feuchtegehalt im Bereich von 10 bis 50 % besitzen, besonders vorzugsweise im Bereich von 20 bis 45 %, bestimmt gemäß ISO 6673.

Die vorstehend im Zusammenhang mit erfindungsgemäßen Verfahren und nachfolgend im Zusammenhang mit erfindungsgemäßen entkoffeinierten Rohkaffeebohnen, entkoffeinierten gerösteten Kaffeebohnen oder daraus hergestellten Zubereitungen dargelegten Effekte und Vorteile werden bei einer Verfahrensgestaltung mit den hier beschriebenen Parametern in vielen Fällen besonders vorteilhaft verwirklicht.

Insbesondere kommt es bei geeigneter Auswahl von hier angegebenen Parametern und Anlagentechnik zu besonders vorteilhaften kombinierten Effekten wie vorstehend beschrieben, insbesondere hinsichtlich einer Reduzierung von Mikroorganismen, bevorzugt coliformer Bakterien, und besonders vorteilhaften Extraktionseigenschaften der so behandelten Rohkaffeebohnen.

Besonders bevorzugt ist ein erfindungsgemäßes Verfahren, in dem die im Einzelnen beschriebenen bevorzugten Parameter
- mit der Verwendung von flüssigem Kohlenstoffdioxid und/oder Dichlormethan im nachfolgenden Schritt "(c) Extrahieren von Koffein aus den PEF-behandelten Rohkaffeebohnen, mittels einer Extraktionsflüssigkeit, so dass entkoffeinierte, PEF-behandelte, Rohkaffeebohnen resultieren" bzw. "(c-v) Extrahieren von Koffein aus den PEF-behandelten, vorgequollenen Rohkaffeebohnen, mittels einer Extraktionsflüssigkeit, so dass entkoffeinierte, PEF-behandelte, vorgequollene Rohkaffeebohnen resultieren" kombiniert werden
   und/oder
- mit einem Trocknungsverfahren im Schritt "Trocknen der entkoffeinierten, PEF-behandelten Rohkaffeebohnen, vorzugsweise der entkoffeinierten, PEF-behandelten, vorgequollenen Rohkaffeebohnen, so dass getrocknete entkoffeinierte Rohkaffeebohnen resultieren, vorzugsweise getrocknete entkoffeinierte Rohkaffeebohnen mit einem vorbestimmten Feuchtegehalt." kombiniert werden, das eine Wirbelschichttrocknung umfasst.

Besonders bevorzugt ist ein erfindungsgemäßes Verfahren (wie vorstehend beschrieben, vorzugsweise wie vorstehend als bevorzugt bezeichnet), wobei beim Vorquellen von Rohkaffeebohnen mit Quellflüssigkeit in Schritt (a-v), eine Aufnahme von mindestens 10 Gew.-% Quellflüssigkeit erfolgt, bevorzugt mindestens 20 Gew.-%, besonders bevorzugt mindestens 30 Gew.-%, bezogen auf die Gesamtmasse der Rohkaffeebohnen vor dem Vorquellen.

Die aufgenommene Menge an Quellflüssigkeit wird durch Differenzwägung bestimmt; daraus wird der Gewichtsprozentwert für die Aufnahme errechnet.

Die vorstehend im Zusammenhang mit erfindungsgemäßen Verfahren und nachfolgend im Zusammenhang mit erfindungsgemäßen entkoffeinierten Rohkaffeebohnen, entkoffeinierten gerösteten Kaffeebohnen oder daraus hergestellten Zubereitungen dargelegten Effekte und Vorteile werden bei einer Durchführung des Vorquellens insbesondere mit den hier beschriebenen Parametern in vielen Fällen besonders vorteilhaft verwirklicht.

Die Erfindung betrifft auch entkoffeinierte Rohkaffeebohnen, entkoffeinierte geröstete Kaffeebohnen oder daraus hergestellte Zubereitungen, herstellbar und/oder hergestellt durch ein erfindungsgemäßes Verfahren (wie vorstehend beschrieben, vorzugsweise wie vorstehend als bevorzugt bezeichnet), wobei das PEF-Behandeln von Rohkaffeebohnen zu Veränderungen an Zellwänden und Zellmembranen in den Rohkaffeebohnen führt.

Vorzugsweise ist das Bruchverhalten der erfindungsgemäßen entkoffeinierten Rohkaffeebohnen nicht verschlechtert, besonders bevorzugt sogar verbessert, verglichen mit entkoffeinierten Rohkaffeebohnen der gleichen Art und Charge, der zuvor die gleichen Verfahrensschritte durchlaufen hat, lediglich ohne eine PEF-Behandlung; das Bruchverhalten wird jeweils bestimmt mittels der durch Nedomová, Trnka, Stoklasovä und Buchar in dem Fachartikel "Strength of coffee beans under static and dynamic loading", 2013 (doi:10.11118/actaun201361030743), auf Seite 745 beschriebenen "dynamic loading" Methode.

Vorzugsweise weisen erfindungsgemäße entkoffeinierte Rohkaffeebohnen (vorgequollen oder nicht-vorgequollen) irreversible Poren in den Zellmembranen und Zellwänden der Rohkaffeebohnen auf. Die obigen Ausführungen gelten entsprechend.

Die Erfindung betrifft auch die Verwendung einer PEF-Vorrichtung (d. h. einer Vorrichtung zum PEF-Behandeln von Artikeln, insbesondere von Lebensmitteln) zur PEF-Behandlung von (gegebenenfalls vorgequollenen) Rohkaffeebohnen vor der Entkoffeinierung.

Die vorstehend im Zusammenhang mit erfindungsgemäßen Verfahren und erfindungsgemäßen entkoffeinierten Rohkaffeebohnen, entkoffeinierten gerösteten Kaffeebohnen oder daraus hergestellten Zubereitungen dargelegten Effekte und Vorteile können bei erfindungsgemäßer Verwendung der PEF-Vorrichtung erreicht und nach den Erfordernissen des Einzelfalls eingestellt werden.

Bevorzugt ist eine erfindungsgemäße Verwendung einer PEF-Vorrichtung (wie vorstehend beschrieben, vorzugsweise wie vorstehend als bevorzugt bezeichnet), wobei die PEF-Behandlung durchgeführt wird
- vor einer Entkoffeinierung (vgl. das erfindungsgemäße Verfahren),
   und/oder
- vor und/oder nach einem Vorquellen (vorzugsweise nach einem Vorquellen),
   und/oder
- vor und/oder nach einem Trocknen,
   und/oder
- vor einem Rösten (vgl. das erfindungsgemäße Verfahren zum Herstellen von entkoffeinierten gerösteten Kaffeebohnen)
   und/oder
- zur Reduktion des Keimgehalts der (vorzugsweise vorgequollenen) Rohkaffeebohnen
   und/oder
- zur Verbesserung der Koffein-Extrahierbarkeit der (vorzugsweise vorgequollenen) Rohkaffeebohnen.

Je nach den Erfordernissen des Einzelfalles wählt der Fachmann aus, zu welchem Zeitpunkt und zu welchem Zweck eine PEF-Behandlung durchgeführt wird. In vielen Fällen ist es bevorzugt, eine PEF-Behandlung zu mehr als einem Zweck durchzuführen. Zudem ist es in einigen Fällen bevorzugt, mehr als eine PEF-Behandlung durchzuführen. PEF-Behandlungen können zu verschiedenen Zeitpunkten durchgeführt werden und verschiedenen Zwecken dienen.

Die vorstehend im Zusammenhang mit erfindungsgemäßen Verfahren und erfindungsgemäßen entkoffeinierten Rohkaffeebohnen, entkoffeinierten gerösteten Kaffeebohnen oder daraus hergestellten Zubereitungen dargelegten Effekte und Vorteile können bei erfindungsgemäßer Verwendung der PEF-Vorrichtung erreicht und nach den Erfordernissen des Einzelfalls eingestellt werden.

Die Erfindung betrifft auch eine Anlage zum Entkoffeinieren von Rohkaffeebohnen in einem erfindungsgemäßen Verfahren (wie vorstehend beschrieben, vorzugsweise wie vorstehend als bevorzugt bezeichnet), zumindest umfassend:
- eine Vorrichtung zum PEF-Behandeln von Rohkaffeebohnen,
- eine dazu (d.h. zu der Vorrichtung zum PEF-Behandeln) nachgeschaltete Vorrichtung zum Entkoffeinieren der PEF-behandelten Rohkaffeebohnen,
- eine Vorrichtung zum Trocknen des hergestellten, entkoffeinierten Rohkaffees, wobei das Trocknen der entkoffeinierten, PEF-behandelten, rohkaffeebohnen mittels eines Verfahrens durchgeführt wird, welches ausgewählt ist aus der Gruppe bestehend aus:
   - Wirbelschichtverfahren, Vakuumtrocknungsverfahren und Kombinationen davon.

Die Vorrichtung zum PEF-Behandeln von Rohkaffeebohnen ist besonders geeignet zur Durchführung eines erfindungsgemäßen Verfahrens zum Herstellen von entkoffeinierten Rohkaffeebohnen, entkoffeinierten gerösteten Kaffeebohnen oderdaraus hergestellten Zubereitungen (wie vorstehend beschrieben, vorzugsweise wie vorstehend als bevorzugt bezeichnet).

Die vorstehend im Zusammenhang mit erfindungsgemäßen Verfahren, erfindungsgemä-ßen entkoffeinierten Rohkaffeebohnen, entkoffeinierten gerösteten Kaffeebohnen oder daraus hergestellten Zubereitungen und erfindungsgemäßen Verwendungen dargelegten Effekte und Vorteile können bei erfindungsgemäßer Verwendung der Vorrichtung zum Behandeln erreicht und nach den Erfordernissen des Einzelfalls eingestellt werden.

Bevorzugt ist eine erfindungsgemäße Anlage zum Entkoffeinieren von Rohkaffeebohnen in einem erfindungsgemäßen Verfahren (wie vorstehend beschrieben, vorzugsweise wie vorstehend als bevorzugt bezeichnet), weiter umfassend:
eine der Vorrichtung zum PEF-Behandeln vorgeschaltete oder nachgeschaltete Vorrichtung zum Vorquellen von Rohkaffeebohnen (vorzugsweise vorgeschaltet)
   und/oder
eine der Vorrichtung zum PEF-Behandeln (vorzugsweise unmittelbar) nachgeschaltete Vorrichtung zum Entfernen anhaftenden Wassers (wie es typischerweise nach einer PEF-Behandlung vorliegt) von Rohkaffeebohnen, vorzugsweise umfassend eine Trocknungsschnecke und/oder ein Gebläse
   und/oder
eine Vorrichtung zum Abfüllen und/oder Transportieren hergestellten, entkoffeinierten Rohkaffees.

Je nach den Erfordernissen des Einzelfalls sind einzelne, mehrere oder sämtliche der hier definierten Vorrichtungen für eine besonders vorteilhafte Durchführung des erfindungsgemäßen Verfahrens besonders bevorzugt. Der Fachmann wählt in Kenntnis des jeweiligen Einzelfalls die jeweils bevorzugte Vorrichtung bzw. die jeweils bevorzugten Vorrichtungen bzw, die jeweils bevorzugten Kombinationen von Vorrichtungen selbstständig aus.

Vorzugsweise umfasst die erfindungsgemäße Anlage eine computergestützte Einheit zum Steuern und/oder Regeln der automatisierten PEF-Behandlung und Entkoffeinierung der Rohkaffeebohnen.

Die vorstehend im Zusammenhang mit erfindungsgemäßen Verfahren und erfindungsgemäßen entkoffeinierten Rohkaffeebohnen, entkoffeinierten gerösteten Kaffeebohnen oder daraus hergestellten Zubereitungen und erfindungsgemäßen Verwendungen dargelegten Effekte und Vorteile können bei erfindungsgemäßen Verwendung der PEF-Vorrichtung erreicht und nach den Erfordernissen des Einzelfalls eingestellt werden.

Besonders bevorzugt ist ein Verfahren zum Herstellen von entkoffeinierten Rohkaffeebohnen, entkoffeinierten gerösteten Kaffeebohnen oder daraus hergestellten Zubereitungen, (wie vorstehend beschrieben, vorzugsweise wie vorstehend als bevorzugt bezeichnet) mit den folgenden Merkmalen:
(a) Vorquellen von Rohkaffeebohnen mit Quellflüssigkeit, so dass vorgequollene Rohkaffeebohnen resultieren,
(b) PEF-Behandeln der vorgequollenen Rohkaffeebohnen, so dass PEF-behandelte, vorgequollene Rohkaffeebohnen resultieren,
(c) Extrahieren von Koffein aus den PEF-behandelten, vorgequollenen Rohkaffeebohnen, mittels einer Extraktionsflüssigkeit, so dass entkoffeinierte, PEF-behandelte, vorgequollene Rohkaffeebohnen resultieren,
(d) Trocknen der entkoffeinierten, PEF-behandelten, vorgequollenen Rohkaffeebohnen, so dass getrocknete entkoffeinierte Rohkaffeebohnen resultieren,
   wobei das Trocknen der entkoffeinierten, PEF-behandelten, vorgequollenen Rohkaffeebohnen mittels eines Verfahrens durchgeführt wird, welches ausgewählt ist aus der Gruppe bestehend aus:
      - Wirbelschichtverfahren, Vakuumtrocknungsverfahren, Vibrationstrocknung, Gefriertrocknung, Heißlufttrocknung, Mikrowellentrocknung, Infrarottrocknung und Kombinationen davon, und
   welches vorzugsweise ausgewählt ist aus der Gruppe bestehend aus:
      - Wirbelschichtverfahren, Vakuumtrocknungsverfahren und Kombinationen davon,
   wobei bevorzugt das Trocknungsverfahren zumindest eine Wirbelschichttrocknung umfasst, besonders bevorzugt in Kombination mit einer Vakuumtrocknung,
      und
   wobei ganz besonders bevorzugt zunächst die Vakuumtrocknung erfolgt und danach die Wirbelschichttrocknung.

Besonders bevorzugt ist ein Verfahren zum Herstellen von entkoffeinierten Rohkaffeebohnen, entkoffeinierten gerösteten Kaffeebohnen oder daraus hergestellten Zubereitungen, (wie vorstehend beschrieben, vorzugsweise wie vorstehend als bevorzugt bezeichnet) mit den folgenden Merkmalen:
(a) Vorquellen von Rohkaffeebohnen mit Quellflüssigkeit, so dass vorgequollene Rohkaffeebohnen resultieren,
(b) PEF-Behandeln der vorgequollenen Rohkaffeebohnen, so dass PEF-behandelte, vorgequollene Rohkaffeebohnen resultieren,
(c) Extrahieren von Koffein aus den PEF-behandelten, vorgequollenen Rohkaffeebohnen, mittels einer Extraktionsflüssigkeit, so dass entkoffeinierte, PEF-behandelte, vorgequollene Rohkaffeebohnen resultieren,
(d) Trocknen der entkoffeinierten, PEF-behandelten, vorgequollenen Rohkaffeebohnen, so dass getrocknete entkoffeinierte Rohkaffeebohnen resultieren,
wobei
die Quellflüssigkeit eine wässrige Quellflüssigkeit ist
   und/oder
die Extraktionsflüssigkeit ausgewählt ist aus der Gruppe bestehend aus:
   - flüssigem Kohlenstoffdioxid, überkritischem Kohlenstoffdioxid, Dichlormethan, Dichlorethan, Ethanol, Trichlomethan, Trichlorethan, Aceton, Ethylacetat, Methylacetat, Methanol, Kaffeeöl und Wasser,
vorzugsweise ausgewählt aus der Gruppe bestehend aus:
   - Wasser, Ethylacetat, flüssigem Kohlenstoffdioxid, überkritischem Kohlenstoffdioxid und Dichlormethan,
besonders vorzugsweise ausgewählt aus der Gruppe bestehend aus:
   - flüssigem Kohlenstoffdioxid und Dichlormethan,
ganz besonders vorzugsweise ist die Extraktionsflüssigkeit flüssiges Kohlenstoffdioxid; hierbei wird vorzugsweise
das Trocknen der entkoffeinierten, PEF-behandelten, vorgequollenen Rohkaffeebohnen mittels eines Verfahrens durchgeführt, welches ausgewählt ist aus der Gruppe bestehend aus:
   - Wirbelschichtverfahren, Vakuumtrocknungsverfahren, Vibrationstrocknung, Gefriertrocknung, Heißlufttrocknung, Mikrowellentrocknung, Infrarottrocknung und Kombinationen davon, und
welches besonders vorzugsweise ausgewählt ist aus der Gruppe bestehend aus:
   - Wirbelschichtverfahren, Vakuumtrocknungsverfahren und Kombinationen davon,
wobei bevorzugt das Trocknungsverfahren zumindest eine Wirbelschichttrocknung umfasst, besonders bevorzugt in Kombination mit einer Vakuumtrocknung,
   und
wobei ganz besonders bevorzugt zunächst die Vakuumtrocknung erfolgt und danach die Wirbelschichttrocknung.

### Abbildungen:

Nachfolgend wird die Erfindung anhand von Abbildungen näher erläutert.

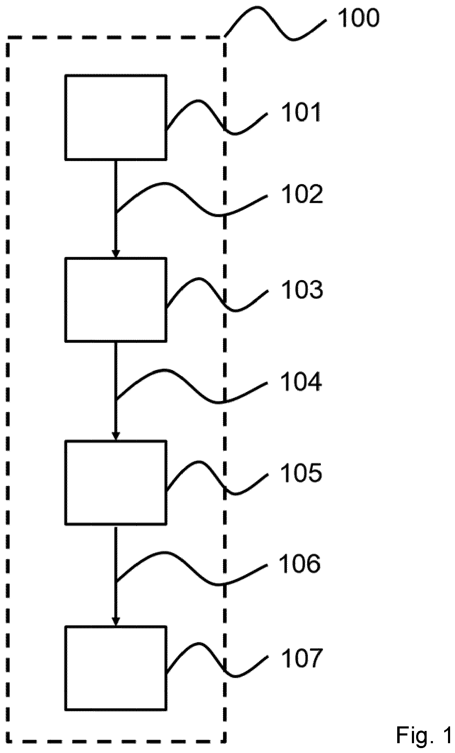

**Fig. 1** zeigt im Fließbild eine erste Ausführungsform eines erfindungsgemäßen Verfahrens **100** zum Entkoffeinieren von Rohkaffeebohnen **101,** sodass entkoffeinierte, PEF-behandelte, vorgequollene Rohkaffeebohnen **107** resultieren. Vorzugsweise wird das erfindungsgemäße Verfahren zum Entkoffeinieren von Rohkaffeebohnen in einer erfindungsgemäßen Anlage zum Entkoffeinieren von Rohkaffeebohnen (wie vorstehend beschrieben, vorzugsweise wie vorstehend als bevorzugt bezeichnet) durchgeführt.

In einem ersten Schritt **102** des Verfahrens **100** werden eingesetzte Rohkaffeebohnen **101** mit Quellflüssigkeit vorgequollen, sodass vorgequollene Rohkaffeebohnen **103** resultieren. Besonders vorteilhaft erfolgt im erfindungsgemäßen Verfahren das Vorquellen der eingesetzten Rohkaffeebohnen mit Quellflüssigkeit in einer erfindungsgemäßen Anlage, in der der Vorrichtung zum PEF-Behandeln eine Vorrichtung zum Vorquellen von Rohkaffeebohnen (wie vorstehend beschrieben, vorzugsweise wie vorstehend als bevorzugt bezeichnet) vorgeschaltet ist.

In einem zweiten Schritt **104** des Verfahrens **100** werden die so erhaltenen vorgequollenen Rohkaffeebohnen **103** einer PEF-Behandlung unterzogen, sodass PEF-behandelte, vorgequollene Rohkaffeebohnen **105** resultieren. Besonders vorteilhaft erfolgt im erfindungsgemäßen Verfahren die PEF-Behandlung der eingesetzten Rohkaffeebohnen in einer erfindungsgemäßen Anlage mit einer Vorrichtung zum PEF-Behandeln von Rohkaffeebohnen (wie vorstehend beschrieben, vorzugsweise wie vorstehend als bevorzugt bezeichnet).

In einem weiteren Schritt **106** des Verfahrens **100** erfolgt das Extrahieren von Koffein aus den PEF-behandelten vorgequollenen Rohkaffeebohnen **105,** sodass entkoffeinierte, PEF-behandelte, vorgequollene Rohkaffeebohnen **107** resultieren. Besonders vorteilhaft erfolgt im erfindungsgemäßen Verfahren das Extrahieren von Koffein (Entkoffeinierung) in einer erfindungsgemäßen Anlage mit einer Vorrichtung zum PEF-Behandeln von Rohkaffeebohnen und einer dazu nachgeschalteten Vorrichtung zum Entkoffeinieren der PEF-behandelten Rohkaffeebohnen (wie vorstehend beschrieben, vorzugsweise wie vorstehend als bevorzugt bezeichnet).

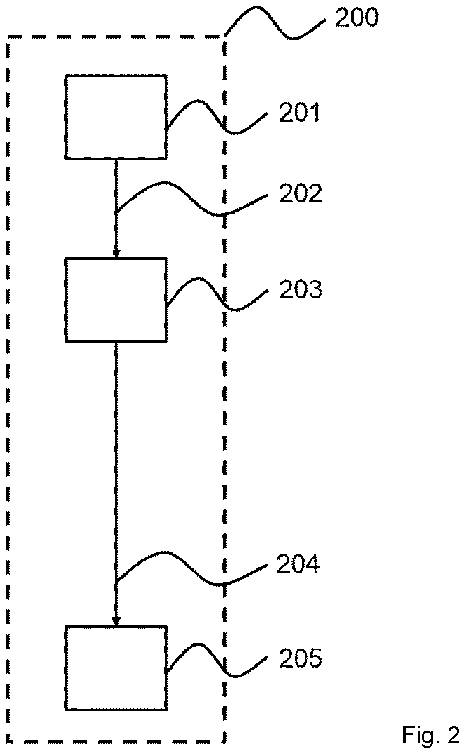

**Fig. 2** zeigt im Fließbild schematisch ein Verfahren zum Entkoffeinieren von Rohkaffeebohnen ohne PEF-Behandlung. Eingesetzte Rohkaffeebohnen **201** werden in einem ersten Schritt des Verfahrens **200** mit Quellflüssigkeit vorgequollen **202,** sodass vorgequollene Rohkaffeebohnen **203** resultieren.

In einem nächsten Schritt des Verfahrens **200** folgt das Extrahieren von Koffein aus den vorgequollenen Rohkaffeebohnen **106,** sodass entkoffeinierte vorgequollene Rohkaffeebohnen **107** resultieren. Eine PEF-Behandlung findet in diesem nichterfindungsgemäßen Vergleichsbeispiel nicht statt.

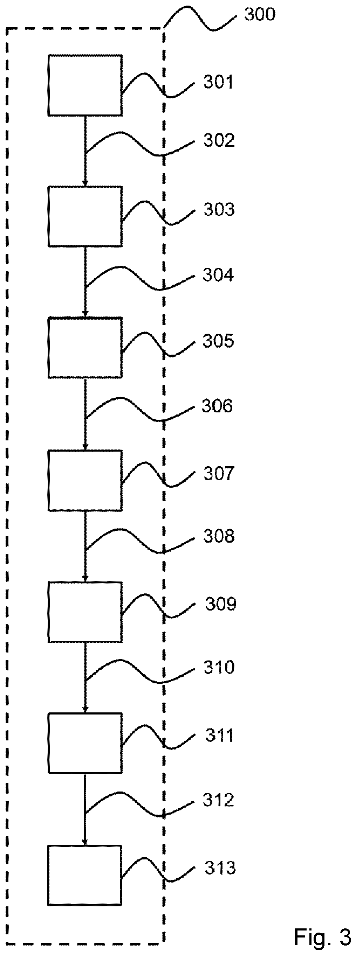

**Fig. 3** zeigt im Fließbild eine weitere Ausführungsform eines erfindungsgemäßen Verfahrens **300** zum Entkoffeinieren von Rohkaffeebohnen. Besonders vorteilhaft wird dieses erfindungsgemäße Verfahren zum Entkoffeinieren von Rohkaffeebohnen in einer erfindungsgemäßen Anlage zum Entkoffeinieren von Rohkaffeebohnen (wie vorstehend beschrieben, vorzugsweise wie vorstehend als bevorzugt bezeichnet) durchgeführt.

Rohkaffeebohnen mit einer Feuchte von ca. 8-12 % **301** werden mit wässriger Quellflüssigkeit auf 45 % Feuchte vorgequollen **302,** sodass vorgequollene Rohkaffeebohnen **303** resultieren. Besonders vorteilhaft erfolgt hier das Vorquellen der eingesetzten Rohkaffeebohnen mit einer Feuchte von ca. 8-12 % mit wässriger Quellflüssigkeit auf 45 % Feuchte in einer erfindungsgemäßen Anlage, wobei der Vorrichtung zum PEF-Behandeln eine Vorrichtung zum Vorquellen von Rohkaffeebohnen (wie vorstehend beschrieben, vorzugsweise wie vorstehend als bevorzugt bezeichnet) vorgeschaltet ist.

In einem nächsten Schritt **304** des Verfahrens **300** erfolgt das PEF-behandeln der vorgequollenen Rohkaffeebohnen, sodass PEF-behandelte, vorgequollene Rohkaffeebohnen mit anhaftendem Wasser **305** resultieren. Besonders vorteilhaft erfolgt hier die PEF-Behandlung der eingesetzten Rohkaffeebohnen in einer erfindungsgemäßen Anlage mit einer Vorrichtung zum PEF-Behandeln von Rohkaffeebohnen (wie vorstehend beschrieben, vorzugsweise wie vorstehend als bevorzugt bezeichnet). In einem nächsten Schritt **306** des Verfahrens **300** erfolgt das Entfernen des anhaftenden Wassers mittels einer Trocknungsschnecke und eines Gebläses, sodass PEF-behandelte, vorgequollene Rohkaffeebohnen **307** resultieren. Besonders vorteilhaft erfolgt hier das Entfernen des anhaftenden Wassers von den PEF-behandelten Rohkaffeebohnen in einer erfindungsgemäßen Anlage, wobei der Vorrichtung zum PEF-Behandeln eine Vorrichtung (wie vorstehend beschrieben, vorzugsweise wie vorstehend als bevorzugt bezeichnet) zum Entfernen anhaftenden Wassers von Rohkaffeebohnen umfassend eine Trocknungsschnecke und ein Gebläse nachgeschaltet ist.

In einem nächsten Schritt **308** des Verfahrens **300** erfolgt das Extrahieren von Koffein aus den PEF-behandelten vorgequollenen Rohkaffeebohnen mittels flüssigem COz, sodass entkoffeinierte, PEF-behandelte, vorgequollene Rohkaffeebohnen **309** resultieren. Besonders vorteilhaft erfolgt hier das Extrahieren von Koffein (Entkoffeinierung) in einer erfindungsgemäßen Anlage mit einer Vorrichtung zum Entkoffeinieren der PEF-behandelten Rohkaffeebohnen (wie vorstehend beschrieben, vorzugsweise wie vorstehend als bevorzugt bezeichnet).

In einem weiteren Schritt **310** des Verfahrens **300** erfolgt eine Vakuumtrocknung der entkoffeinierten, PEF-behandelten, vorgequollenen Rohkaffeebohnen bis auf einen Feuchtegehalt von 20-25 %, sodass entkoffeinierte, PEF-behandelte, vorgequollene Rohkaffeebohnen **311** resultieren. Besonders vorteilhaft erfolgt hier die Vakuumtrocknung in einer erfindungsgemäßen Anlage mit einer Vorrichtung zum (Vakuum-)Trocknen des hergestellten, entkoffeinierten Rohkaffees.

In einem nächsten Schritt **312** des Verfahrens **300** erfolgt eine Wirbelschichttrocknung der entkoffeinierten, PEF-behandelten, vorgequollenen Rohkaffeebohnen bis auf einen Restfeuchtegehalt von 9-13 %, sodass getrocknete, entkoffeinierte Rohkaffeebohnen **313** resultieren. Besonders vorteilhaft erfolgt hier die Wirbelschichttrocknung in einer erfindungsgemäßen Anlage mit einer Vorrichtung zum Trocknen des hergestellten, entkoffeinierten Rohkaffees.

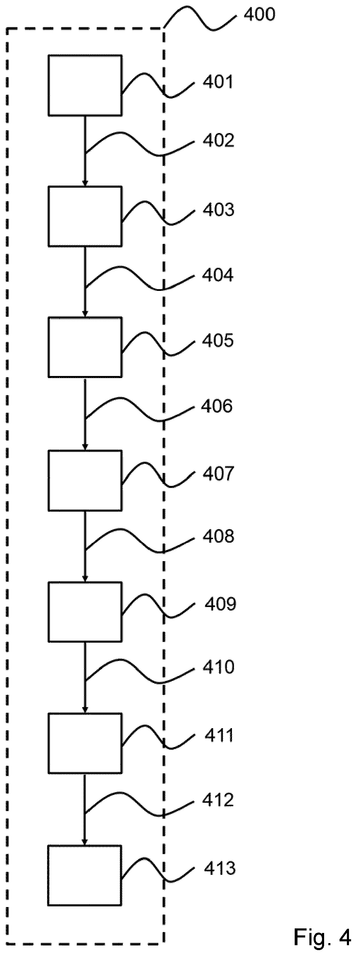

**Fig. 4** zeigt in einem Fließbild ein Verfahren zur Entkoffeinierung von Rohkaffeebohnen ohne den Einsatz einer PEF-Behandlung (nicht erfindungsgemäß).

In einem ersten Schritt **402** des Verfahrens **400** wird Rohkaffee mit einer Feuchte von 8-12 % **401** mit einer Quellflüssigkeit zum Vorquellen gebracht, bis auf eine Feuchte von ca. 45 %, sodass vorgequollene Rohkaffeebohnen **403** resultieren.

In einem weiteren Schritt **404** des Verfahrens **400** durchlaufen die vorgequollenen Rohkaffeebohnen **403** eine ausgeschaltete PEF-Apparatur, sodass es nicht zu einer PEF-Behandlung kommt und vorgequollene Rohkaffeebohnen mit anhaftendem Wasser **405** resultieren.

In einem weiteren Schritt **406** des Verfahrens **400** kommt es zum Entfernen des anhaftenden Wassers auf den vorgequollenen Rohkaffeebohnen mit anhaftendem Wasser mittels einer Trocknungsschnecke und eines Gebläses, sodass vorgequollene Rohkaffeebohnen **407** resultieren.

In einem weiteren Schritt **408** des Verfahrens **400** kommt es zum Extrahieren von Koffein aus den vorgequollenen Rohkaffeebohnen mittels flüssigem COz, sodass entkoffeinierte, vorgequollene Rohkaffeebohnen **409** resultieren.

In einem weiteren Schritt **410** des Verfahrens **400** erfolgt eine Vakuumtrocknung der entkoffeinierten, vorgequollenen Rohkaffeebohnen bis auf einen Restfeuchtegehalt von 20-25 %, sodass entkoffeinierte, vorgequollene Rohkaffeebohnen **411** resultieren.

In einem weiteren Schritt **412** des Verfahrens **400** erfolgt eine Wirbelschichttrocknung der entkoffeinierten, vorgequollenen Rohkaffeebohnen bis auf einen Restfeuchtegehalt von 9-13 %, sodass getrocknete, entkoffeinierte Rohkaffeebohnen **413** resultieren.

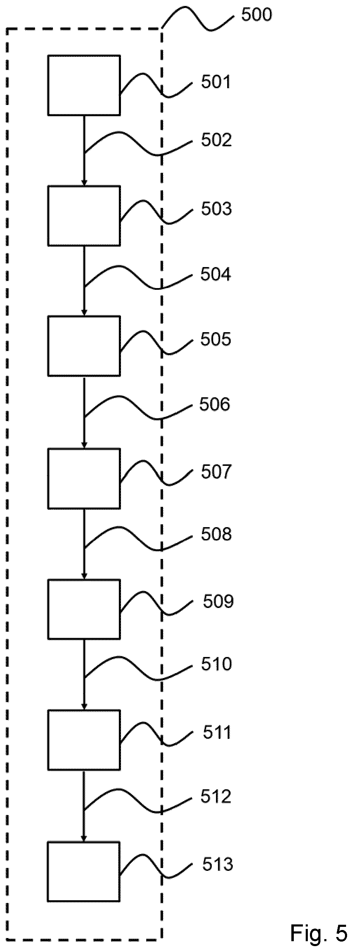

**Fig. 5** zeigt im Fließbild eine weitere Ausführungsform eines erfindungsgemäßen Verfahrens **500** zur Herstellung getrockneter, entkoffeinierter Rohkaffeebohnen **513.**

In einem ersten Schritt **502** des Verfahrens **500** wird Rohkaffee mit einer Feuchte von 8-12 % **501** in einem Glasreaktor befeuchtet und vorgequollen, wobei 150-250 g Dampf pro 500 g Kaffee zum Einsatz kommen, sodass vorgequollene Rohkaffeebohnen **503** resultieren.

In einem weiteren Schritt **504** des Verfahrens **500** werden die vorgequollenen Rohkaffeebohnen **503** einer PEF-Behandlung unterzogen, sodass PEF-behandelte, vorgequollene Rohkaffeebohnen mit anhaftendem Wasser **505** resultieren.

In einem weiteren Schritt **506** des Verfahrens **500** wird das anhaftende Wasser auf den PEF-behandelten, vorgequollenen Rohkaffeebohnen mit anhaftendem Wasser mittels einer Trocknungsschnecke und eines Gebläses entfernt, sodass PEF-behandelte, vorgequollene Rohkaffeebohnen **507** resultieren.

In einem weiteren Schritt **508** des Verfahrens **500** wird Koffein aus den PEF-behandelten, vorgequollenen Rohkaffeebohnen mit Dichlormethan in einer Soxhlet-Apparatur extrahiert, sodass entkoffeinierte, PEF-behandelte, vorgequollene Rohkaffeebohnen **509** resultieren.

In einem weiteren Schritt **510** des Verfahrens **500** werden in einem Heißluft-Probentrocknerdie entkoffeinierten, PEF-behandelten, vorgequollenen Rohkaffeebohnen bis auf einen Feuchtigkeitsgehalt von 20-25 % getrocknet, sodass entkoffeinierte, PEF-behandelte, vorgequollene Rohkaffeebohnen **511** resultieren.

In einem weiteren Schritt **512** des Verfahrens **500** werden entkoffeinierte, PEF-behandelte, vorgequollene Rohkaffeebohnen in einem Wirbelschichttrockner auf einen Feuchtegehalt von 9-12 % getrocknet, sodass getrocknete, entkoffeinierte Rohkaffeebohnen **513** resultieren.

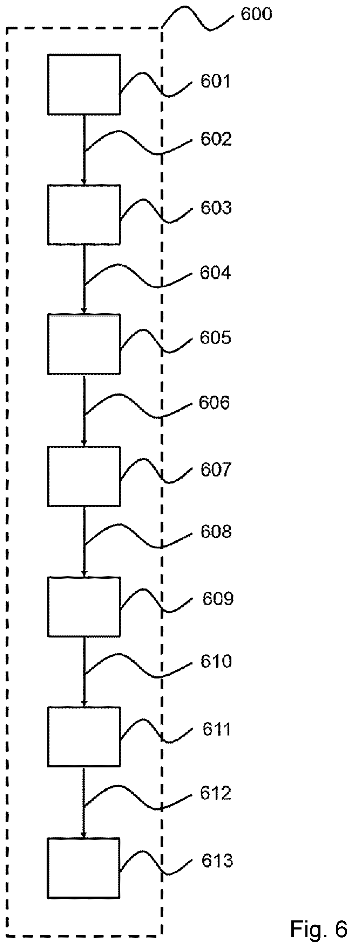

**Fig. 6** zeigt im Fließbild ein alternatives Verfahrens **600** zur Herstellung getrockneter, entkoffeinierter Rohkaffeebohnen **613** ohne eine PEF-Behandlung.

In einem ersten Schritt **602** des Verfahrens **600** wird Rohkaffee mit einer Feuchte von 8-12 % **601** in einem Glasreaktor befeuchtet und vorgequollen, wobei 150 g Dampf pro 500 g Kaffee zum Einsatz kommen, sodass vorgequollene Rohkaffeebohnen **603** resultieren.

In einem weiteren Schritt **604** des Verfahrens **600** durchlaufen die vorgequollenen Rohkaffeebohnen **603** eine ausgeschaltete PEF-Apparatur, sodass es nicht zu einer PEF-Behandlung kommt und vorgequollene Rohkaffeebohnen mit anhaftendem Wasser **605** resultieren.

In einem weiteren Schritt **606** des Verfahrens **600** wird das anhaftende Wasser auf den vorgequollenen Rohkaffeebohnen mit anhaftendem Wasser mittels einer Trocknungsschnecke und eines Gebläses entfernt, sodass vorgequollene Rohkaffeebohnen **607** resultieren.

In einem weiteren Schritt **608** des Verfahrens **600** wird Koffein aus den vorgequollenen Rohkaffeebohnen mit Dichlormethan in einer Soxhlet-Apparatur extrahiert, sodass entkoffeinierte, vorgequollene Rohkaffeebohnen **609** resultieren.

In einem weiteren Schritt **610** des Verfahrens **600** werden die entkoffeinierten, vorgequollenen Rohkaffeebohnen bis auf einen Feuchtigkeitsgehalt von 20-25 % vakuumgetrocknet, sodass entkoffeinierte, vorgequollene Rohkaffeebohnen **611** resultieren.

In einem weiteren Schritt **612** des Verfahrens **600** werden entkoffeinierte, vorgequollene Rohkaffeebohnen in einem Wirbelschichttrockner auf einen Feuchtegehalt von 9-12 % getrocknet, sodass getrocknete, entkoffeinierte Rohkaffeebohnen **613** resultieren.

Nachfolgend wird die Erfindung anhand von Beispielen unter Bezugnahme auf weitere Abbildungen näher erläutert:

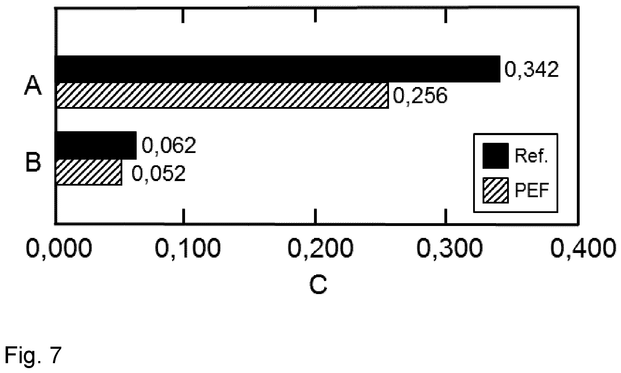

**Fig. 7** zeigt beispielhafte Ergebnisse der Entkoffeinierung vorgequollener PEF-behandelter und nicht PEF-behandelter grüner Rohkaffeebohnen mit flüssigem Kohlenstoffdioxid in der Produktion. Buchstabe "A" kennzeichnet die Ergebnisse für Rohkaffeebohnen des Typs "Arabica". Buchstabe "B" kennzeichnet Ergebnisse für Rohkaffeebohnen vom Typ "Robusta". Die X-Achse, bezeichnet mit "C", gibt den Koffeingehalt in Gew.-% bezogen auf die Trockenmasse der Rohkaffeebohnen (Koffeingehalt i.TM) nach dem Entkoffeinieren an. Die schwarz gefüllten Balken stellen Messwerte dar, die an Referenzproben (ohne PEF-Behandlung) bestimmt wurden (Abkürzung hier und analog in weiteren Figuren "Ref."). Die schraffierten Balken stellen Messwerte dar, die an PEF-behandelten Proben bestimmt wurden (Abkürzung hier und analog in weiteren Figuren "PEF").

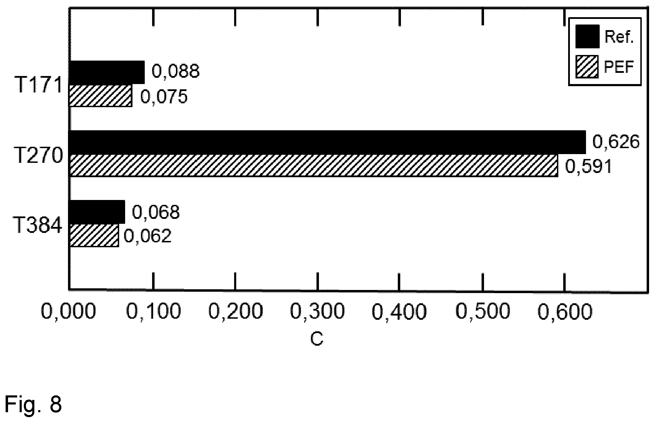

**Fig. 8** zeigt beispielhafte Ergebnisse der Entkoffeinierung verschiedener Chargen vorgequollener PEF-behandelter (PEF-behandelte Probe) und nicht PEF-behandelter (Referenzprobe) Rohkaffeebohnen mit flüssigem COz in der Produktion. Die Bezeichnungen "T171", "T270" und "T384" stehen für die jeweilige Produktionscharge, aus der die jeweils untersuchten Proben entnommen wurden und mit der sie jeweils gemeinsam entkoffeiniert wurden. Die X-Achse, bezeichnet mit "C", gibt den Koffeingehalt in Gew.-% bezogen auf die Trockenmasse der Rohkaffeebohnen (Koffeingehalt i.TM) nach dem Entkoffeinieren an. Die schwarz gefüllten Balken stellen Messwerte dar, die an Referenzproben (ohne PEF-Behandlung) bestimmt wurden. Die schraffierten Balken stellen Messwerte dar, die an PEF-behandelten Proben bestimmt wurden.

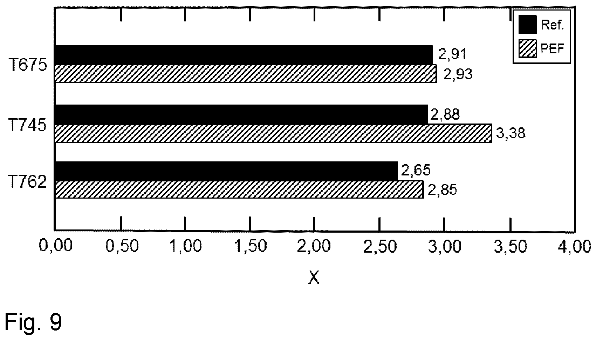

**Fig. 9** zeigt beispielhafte Ergebnisse der Trocknungsraten verschiedener Chargen vorgequollener PEF-behandelter (PEF-behandelte Probe) und nicht PEF-behandelter (Referenzprobe) Rohkaffeebohnen in einem Vakuumtrockner. Die Bezeichnungen "T675", "T745" und "T762" stehen für die jeweilige Produktionscharge, aus der die jeweils untersuchten Proben entnommen wurden und mit der sie jeweils gemeinsam entkoffeiniert wurden. Die X-Achse, bezeichnet mit "X", gibt die Trocknungsrate in Kilogramm / Minute (kg/min) an. Die schwarz gefüllten Balken stellen Messwerte dar, die an Referenzproben (ohne PEF-Behandlung) bestimmt wurden. Die schraffierten Balken stellen Messwerte dar, die an PEF-behandelten Proben bestimmt wurden.

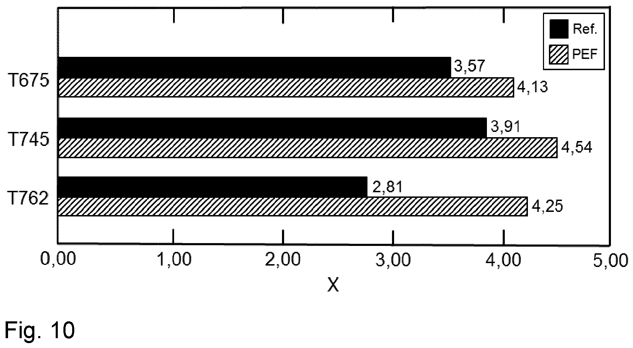

**Fig. 10** zeigt beispielhafte Ergebnisse der Trocknungsraten verschiedener Chargen vorgequollener PEF-behandelter (PEF-behandelte Probe) und nicht PEF-behandelter (Referenzprobe) Rohkaffeebohnen in einem Wirbelschichttrockner. Die Bezeichnungen "T675", "T745" und "T762" stehen für die jeweilige Produktionscharge aus der die jeweils untersuchten Proben entnommen wurden und mit der sie jeweils gemeinsam entkoffeiniert wurden. Die X-Achse, bezeichnet mit "X", gibt die Trocknungsrate in Kilogramm / Minute (kg/min) an. Die schwarz gefüllten Balken stellen Messwerte dar, die an Referenzproben (ohne PEF-Behandlung) bestimmt wurden. Die schraffierten Balken stellen Messwerte dar, die an PEF-behandelten Proben bestimmt wurden.

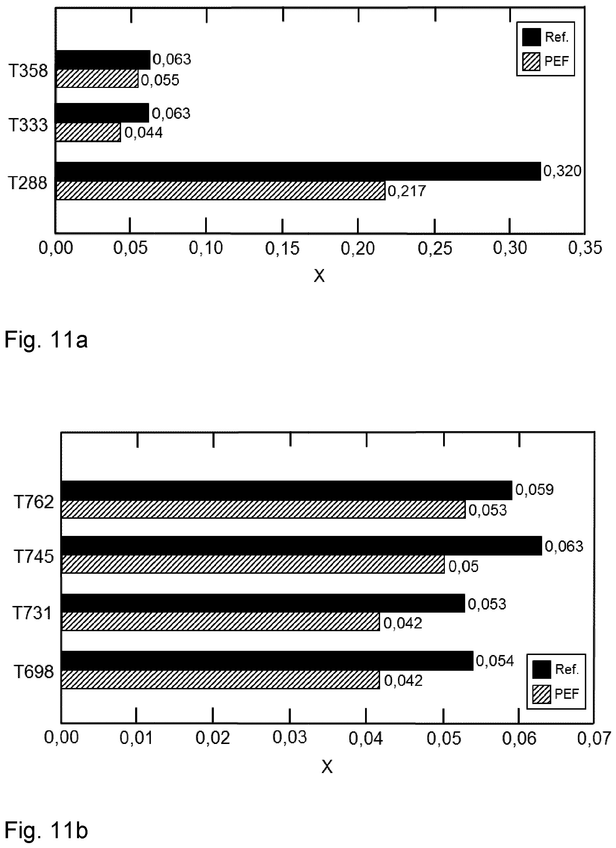

**Fig. 11a** zeigt beispielhafte Ergebnisse der Entkoffeinierung verschiedener Chargen vorgequollener PEF-behandelter (PEF-behandelte Probe) und nicht PEF-behandelter (Referenzprobe) Rohkaffeebohnen mit flüssigem COz. Die Bezeichnungen "T358", "T333" und "T288" stehen für die jeweilige Produktionscharge, aus der die jeweils untersuchten Proben entnommen wurden und mit der sie jeweils gemeinsam entkoffeiniert wurden. Die X-Achse, bezeichnet mit "X", gibt hier und in Fig. 11b den Koffeingehalt in Gew.-% bezogen auf die Trockenmasse der Rohkaffeebohnen (Koffeingehalt i.TM) nach dem Entkoffeinieren an. Die schwarz gefüllten Balken stellen hier und in Fig. 11b Messwerte dar, die an Referenzproben (ohne PEF-Behandlung) bestimmt wurden. Die schraffierten Balken stellen hier und in Fig. 11b Messwerte dar, die an PEF-behandelten Proben bestimmt wurden.
**Fig. 11b** zeigt beispielhafte Ergebnisse der Entkoffeinierung verschiedener Chargen vorgequollener PEF-behandelter (PEF-behandelte Probe) und nicht PEF-behandelter (Referenzprobe) Rohkaffeebohnen mit flüssigem COz. Die Bezeichnungen "T762", "T745", "T731" und "T698"stehen für die jeweilige Produktionscharge aus der die jeweils untersuchten Proben entnommen wurden und mit der sie jeweils gemeinsam entkoffeiniert wurden.

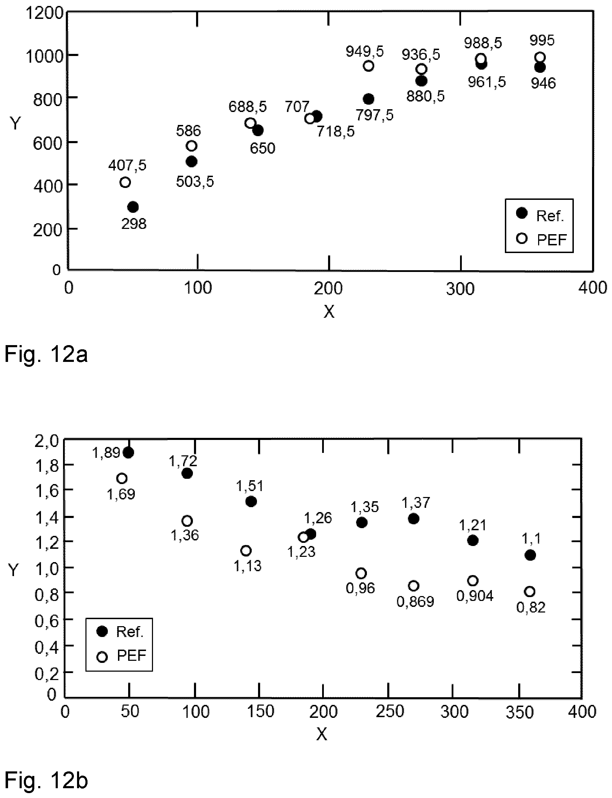

**Fig. 12a** zeigt beispielhafte Ergebnisse der Entkoffeinierung einer Charge vorgequollener PEF-behandelter (PEF-behandelte Probe) und nicht PEF-behandelter (Referenzprobe) Rohkaffeebohnen in einer Soxhlet-Apparatur, bei 70°C, mit Dichlormethan als Extraktionsmittel. Die Y-Achse, bezeichnet mit "Y", gibt die Koffeinkonzentration im Extrakt in Milligramm/Liter (mg/L) an. Die X-Achse, bezeichnet mit "X", gibt hier und in Fig. 12b die Extraktionszeit in Minuten (min) an. Die schwarz gefüllten Punkte stellen hier und in Fig. 12b Messwerte dar, die an Referenzproben (ohne PEF-Behandlung) bestimmt wurden. Die weiß gefüllten Kreise stellen hier und in Fig. 12b Messwerte dar, die an PEF-behandelten Proben bestimmt wurden.
**Fig. 12b** zeigt beispielhafte Ergebnisse der Entkoffeinierung einer Charge vorgequollener PEF-behandelter (PEF-behandelte Probe) und nicht PEF-behandelter (Referenzprobe) Rohkaffeebohnen in einer Soxhlet-Apparatur, bei 70°C, mit Dichlormethan als Extraktionsmittel. Die Y-Achse, bezeichnet mit "Y", gibt -im Unterschied zu Fig. 12a- den Koffeingehalt in den Rohkaffeebohnen in Gew.-% bezogen auf die Trockenmasse der Rohkaffeebohnen (Koffeingehalt i.TM) an.

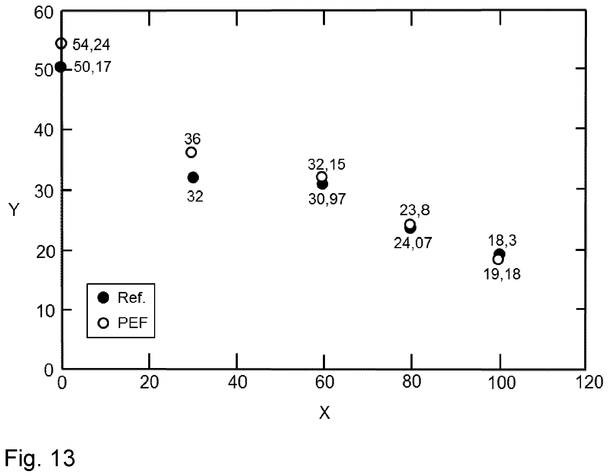

**Fig. 13** zeigt beispielhaft den Verlauf der Trocknung einer Charge (T171) entkoffeinierter, vorgequollener, PEF-behandelter (PEF-behandelte Probe) und nicht PEF-behandelter (Referenzprobe) Rohkaffeebohnen in einem Trommeltrockner. Die Y-Achse, bezeichnet mit "Y", gibt den Feuchtegehalt der entkoffeinierten, vorgequollenen, PEF-behandelten oder nicht PEF-behandelten Rohkaffeebohnen in Gew.-% an, bezogen auf g Wasser pro 100g Rohkaffeebohnen (w/w). Die X-Achse, bezeichnet mit "X", gibt die Trocknungsdauer in Minuten (min) an. Die schwarz gefüllten Punkte stellen Messwerte dar, die an Referenzproben (ohne PEF-Behandlung) bestimmt wurden. Die weiß gefüllten Kreise stellen Messwerte dar, die an PEF-behandelten Proben bestimmt wurden.

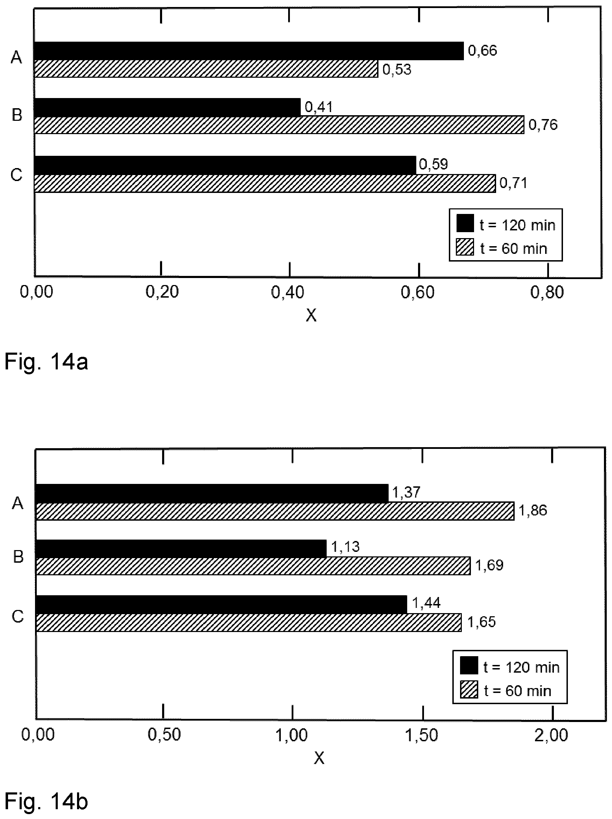

**Fig. 14a** zeigt beispielhafte Ergebnisse der Entkoffeinierung von Fraktionen einer Charge vorgequollener, fraktionsabhängig mit unterschiedlicher spezifischer Energie (kJ/kg) PEF-behandelter (PEF-behandelte Probe) Rohkaffeebohnen in einer Soxhlet-Apparatur, bei 70°C, mit Dichlormethan als Extraktionsmittel. Untersucht wurden Fraktionen einer Charge Rohkaffeebohnen des Typs "Arabica". Buchstabe "A" kennzeichnet hier und in Fig. 14b die Ergebnisse für eine Fraktion, die einer PEF-Behandlung mit einer spezifischen Energie von 22 kJ/kg unterzogen wurden. Buchstabe "B" kennzeichnet hier und in Fig. 14b die Ergebnisse für eine Fraktion, die einer PEF-Behandlung mit einer spezifischen Energie von 10 kJ/kg unterzogen wurden. Buchstabe "C" kennzeichnet hier und in Fig. 14b die Ergebnisse für eine Fraktion, die einer PEF-Behandlung mit einer spezifischen Energie von 5 kJ/kg unterzogen wurden. Die X-Achse, bezeichnet mit "X", gibt hier und in Fig. 14b den Koffeingehalt in Gew.-% bezogen auf die Trockenmasse der Rohkaffeebohnen (Koffeingehalt i.TM) nach dem Entkoffeinieren an. Die schwarz gefüllten Balken stellen hier und in Fig. 14b Messwerte dar, die nach 120 Minuten Extraktionszeit bestimmt wurden (Abkürzung hier und in Figur 14b "t = 120 min"). Die schraffierten Balken stellen hier und in Fig. 14b Messwerte dar, die nach 60 Minuten Extraktionszeit bestimmt wurden (Abkürzung hier und in Figur 14b "t = 60 min").
**Fig. 14b** zeigt beispielhafte Ergebnisse der Entkoffeinierung von Fraktionen einer Charge vorgequollener, fraktionsabhängig mit unterschiedlicher spezifischer Energie (kJ/kg) PEF-behandelter (PEF-behandelte Probe) Rohkaffeebohnen in einer Soxhlet-Apparatur, bei 70°C, mit Dichlormethan als Extraktionsmittel. Untersucht wurden Fraktionen einer Charge Rohkaffeebohnen des Typs "Robusta".

### Beispiele:

### Beispiel 1: Entkoffeinierung von Testkaffee mit flüssigem Kohlenstoffdioxid in der Produktion

Die Auswahl der Substanzen in diesem Beispiel ist lediglich exemplarisch und auch andere Kaffeebohnen, andere Quellflüssigkeit und andere Extraktionsmittel können durch den Fachmann *mutatis mutandis* verwendet werden.

Beispielhaft wurden grüne Rohkaffeebohnen der Testkaffees "Robusta" und "Arabica" gemäß Tabelle 1 eingesetzt.

**Tabelle 1: Probenmaterial - Grüne Rohkaffeebohnen**

| A | B | C | D |
|---|---|---|---|
| | Feuchte [Gew.-%] | Koffein [Gew.-%] | Koffein (i.TM) [Gew. %] |
| Robusta | 11,8 | 2,18 | 2,48 |
| Arabica | 10,7 | 1,11 | 1,24 |

Die Feuchte der grünen Rohkaffeebohnen wurde bestimmt gemäß ISO 6673; entsprechende Prozentangaben beziehen sich auf g/100g Rohkaffeebohnen (w/w). Der Koffeingehalt der grünen Rohkaffeebohnen wurde bestimmt gemäß ISO 20481; entsprechende Prozentangaben beziehen sich auf g/100g Rohkaffeebohnen. Der Koffeingehalt in der Trockenmasse (i. TM, Spalte D) der grünen Rohkaffeebohnen wurde rechnerisch aus dem Feuchtegehalt und dem Koffeingehalt bestimmt; entsprechende Prozentangaben beziehen sich auf g/100g Trockenmasse der Rohkaffeebohnen (w/w).

Die eingesetzten Rohkaffeebohnen wurden mit Direktdampf befeuchtet (150 g Direktdampf auf 500 g Kaffee) bis vorgequollene Rohkaffeebohnen mit einer Feuchte (Kaffeefeuchte) von etwa 32 % vorlagen.

Eine Hälfte der so vorgequollenen Rohkaffeebohnen wurde in die PEF-Behandlungszelle gegeben, die mit Wasser aufgefüllt und zum Entgasen mit einem Löffel durchgerührt wurde. Das Gemisch aus Wasser und Rohkaffeebohnen wurde einer PEF-Behandlung unterzogen bei der die in Tabelle 2 angegebenen Parameter angewendet wurden. Die andere Hälfte der wie oben beschrieben vorgequollenen Rohkaffeebohnen wurde ohne eine PEF-Behandlung als Referenzprobe weiterverarbeitet, indem sie für einen der PEF-Behandlungszeit entsprechenden Zeitraum einer entsprechenden Menge Wasser ausgesetzt wurde (lediglich ohne eine PEF-Behandlung).

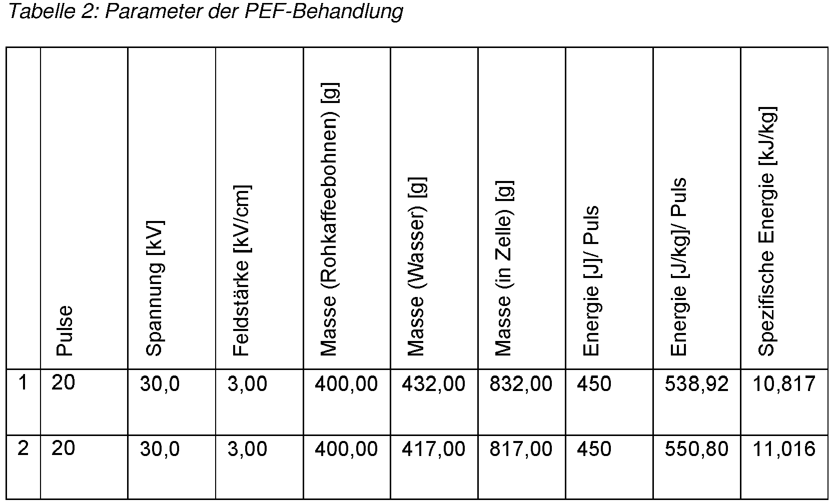

Die so resultierenden PEF-behandelten, vorgequollenen Rohkaffeebohnen wurden in Probenkäfigen in der vorhandenen Produktionslinie mit flüssigem COz als Extraktionsmittel entkoffeiniert. Auch die nicht PEF-behandelten, vorgequollenen Rohkaffeebohnen wurden als Referenzprobe unter gleichen Bedingungen in Probenkäfigen in der vorhandenen Produktionslinie mit flüssigem COz als Extraktionsmittel entkoffeiniert.

Nach erfolgter Entkoffeinierung wurden die PEF-behandelten, vorgequollenen Rohkaffeebohnen, bzw. die nicht PEF-behandelten, vorgequollenen Rohkaffeebohnen als Referenzprobe, den Probenkäfigen entnommen und im Labor in Trocknungsschalen an der Umgebungsluft unter regelmäßigen Wenden auf eine Feuchte von 11 ± 1 % getrocknet. Der Feuchtgehalt wurde gemäß ISO6673 bestimmt. Danach wurde der Koffeingehalt nach ISO 20481 bestimmt.

Nach der Entkoffeinierung wiesen die entkoffeinierten, PEF-behandelten, vorgequollenen Robusta-Rohkaffeebohnen einen Restkoffeingehalt auf, der um 25,1 % unter dem Restkoffeingehalt der nicht PEF-behandelten, vorgequollenen Robusta-Rohkaffeebohnen lag (vgl. Angabe zu Robusta in Tabelle 3 und Fig. 7).

Nach der Entkoffeinierung wiesen die entkoffeinierten, PEF-behandelten, vorgequollenen Arabica-Rohkaffeebohnen einen Restkoffeingehalt auf, der um 16,6 % unter dem Restkoffeingehalt der nicht PEF-behandelten, vorgequollenen Arabica-Rohkaffeebohnen lag (vgl. Angabe zu Arabica in Tabelle 3 und Fig. 7)

Ergebnisse der Versuche aus Beispiel 1 sind in Tabelle 3 zusammengefasst und in Fig. 7 grafisch dargestellt.

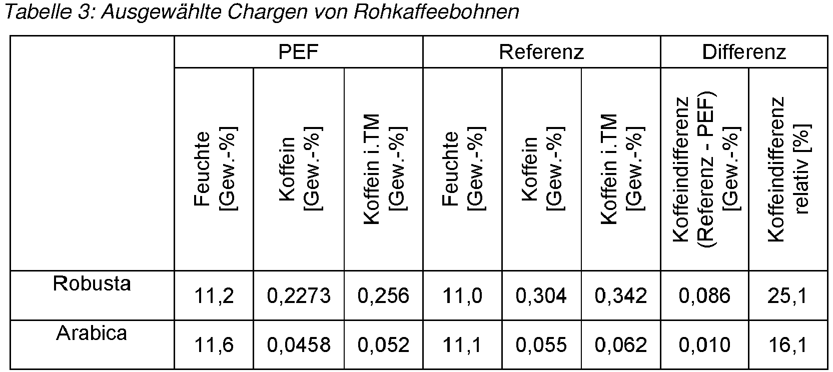

### Beispiel 2: PEF-Behandlungen und Entkoffeinierung mit flüssigem CO2

Die Auswahl der Substanzen in diesem Beispiel ist lediglich exemplarisch und auch andere Kaffeebohnen, andere Quellflüssigkeit und andere Extraktionsmittel können durch den Fachmann *mutatis mutandis* verwendet werden.

Es wurden beispielhaft die in Tabelle 4 näher bezeichneten Chargen von Rohkaffeebohnen ausgewählt.

**Tabelle 4: Ausgewählte Chargen von Rohkaffeebohnen**

| Nr. | Charge | Robusta-Anteil [Gew.-%] | Koffein [Gew.-%] | Feuchte [Gew.-%] |
|---|---|---|---|---|
| 1 | T171 | 15 | 1,299 | 11,4 |
| 2 | T270 | 100 | 1,99 | 11,1 |
| 3 | T384 | 0 | 1,115 | 10,3 |

Aus dem Produktionsprozess zur Entkoffeinierung von Rohkaffee mit flüssigem COz wurden jeweils 6 Proben à 400 g bis 500 g der jeweils ausgewählten Chargen von Rohkaffeebohnen direkt nach der Befeuchtung (also nach dem Vorquellen) mit einer wässrigen Quellflüssigkeit entnommen und jeweils als einzelne Proben einer PEF-Behandlung unterzogen. Zudem wurden entsprechende Referenzproben entnommen, die ohne eine PEF-Behandlung weiterverarbeitet wurden.

Die für die PEF-Behandlung verwendeten Parameter sind in Tabelle 5 zusammengefasst.

Für jede der ausgewählten Chargen wurden 2 Probenkäfige mit jeweils 3 der 6 entnommenen Proben à 400 g bzw. 500 g befüllt, so dass jeder Probenkäfig 1200 g bis 1300 g Rohkaffee enthielt.

Die Probenkäfige mit den PEF-behandelten, vorgequollenen Rohkaffeebohnen sowie die Probenkäfige mit den Referenzproben (nicht PEF-behandelte, vorgequollene Rohkaffeebohnen) wurden zur Entkoffeinierung in dieselbe COz-Entkoffeinierungsanlage (Produktionsanlage) gegeben, wo sie gemeinsam mit der jeweiligen Produktionscharge (aus der sie zuvor entnommen worden waren) mit flüssigem COz entkoffeiniert wurden.

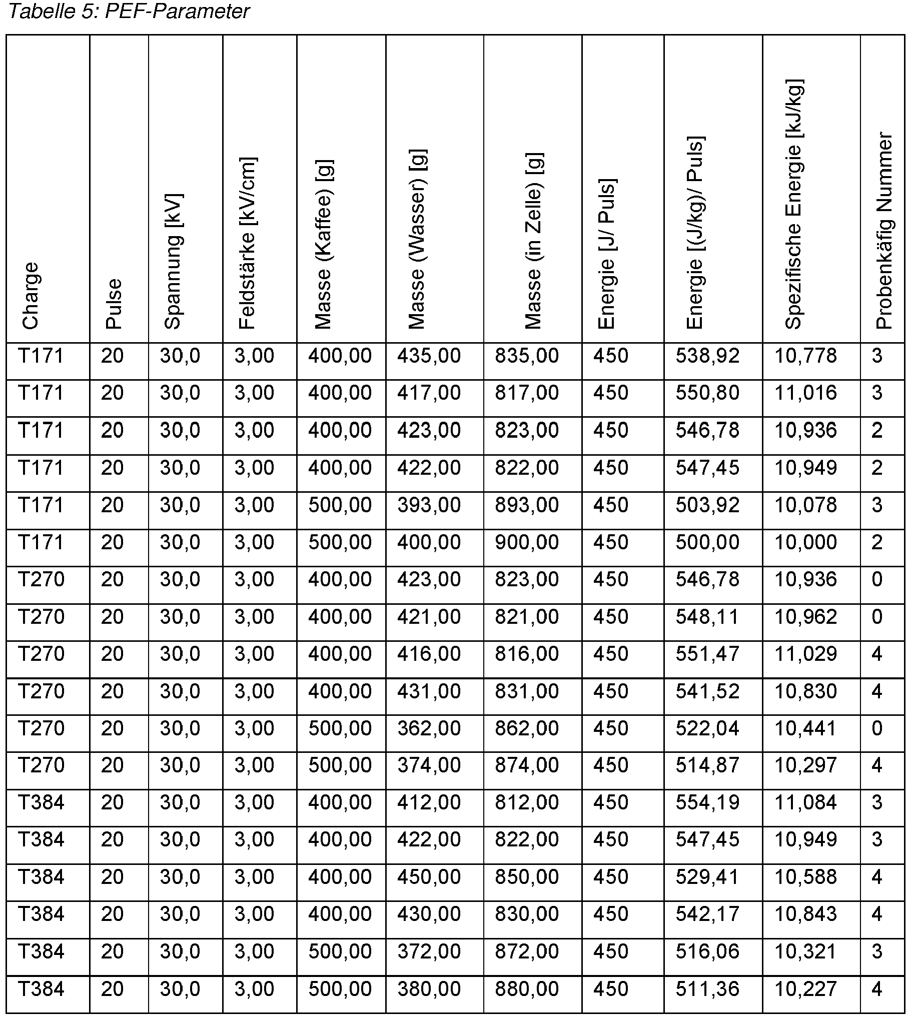

Die Probenkäfige wurden bei der Leerung der Entkoffeinierungsanlage separat entnommen. Aus den Probenkäfigen wurden jeweils ca. 500 g entkoffeinierte, vorgequollene Rohkaffeebohnen entnommen. Im Labor wurde der Feuchtegehalt der entkoffeinierten, vorgequollenen Rohkaffeebohnen direkt mittels NIR-Analytik (Nahinfrarotspektroskopie) bestimmt. Im Anschluss an das Trocknen wurde der Koffeingehalt nach ISO 20481 bestimmt.

Die Ergebnisse dieser Versuche sind in Tabellen 6a und 6b zusammengefasst und in Fig. 8 grafisch aufgetragen.

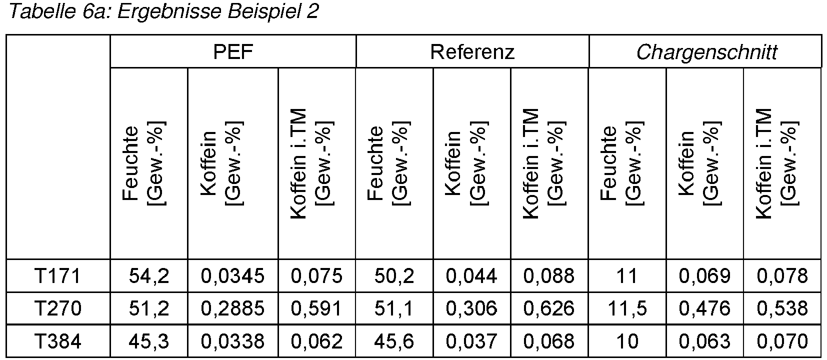

**Tabelle 6b: Ergebnisse Beispiel 2**

| | Koffeindifferenz (Referenz - PEF) | Koffeindifferenz relativ |
|---|---|---|
| | **[**%**]** | **[**%**]** |
| T171 | 0,013 | 14,6 |
| T270 | 0,036 | 5,7 |
| T384 | 0,006 | 9,1 |
| Mittelwert | | 9,8 |

Die entkoffeinierten, PEF-behandelten, vorgequollenen Rohkaffeebohnen besitzen jeweils einen niedrigeren Koffeingehalt als die entkoffeinierten, nicht PEF-behandelten, vorgequollenen Rohkaffeebohnen der jeweils gleichen Charge (bei ansonsten identischer Behandlung).

### Beispiel 3: Chargenweise PEF-Behandlung

Beispielhaft wurde für die Verwendung in der Entkoffeinierung von Rohkaffee mit flüssigem COz eine PEF-Anlage direkt in den bestehenden in industriellen Prozess zur Entkoffeinierung eingebunden. Mit diesem Testaufbau wurden komplette Kaffeechargen von ca. 4000 kg vorgequollenem Rohkaffee PEF-behandelt und mit Referenzchargen, die nicht PEF-behandelt wurden, verglichen.

Der Rohkaffee wurde in einem Befeuchtungsbehälter mit einer wässrigen Quellflüssigkeit auf eine Feuchte von 42 bis 45 % befeuchtet und anschließend direkt in einen Wasserstrom geleitet der durch die PEF-Behandlungszelle geleitet wurde. Für die PEF-behandelten Chargen wurde die PEF-Apparatur hierbei angeschaltet und eine PEF-Behandlung (gemäß der Parameter in Tabelle 7) durchgeführt; für die Referenzchargen wurde die Zelle nicht eingeschaltet, so dass diese ohne eine PEF-Behandlung denselben Prozessweg durchliefen.

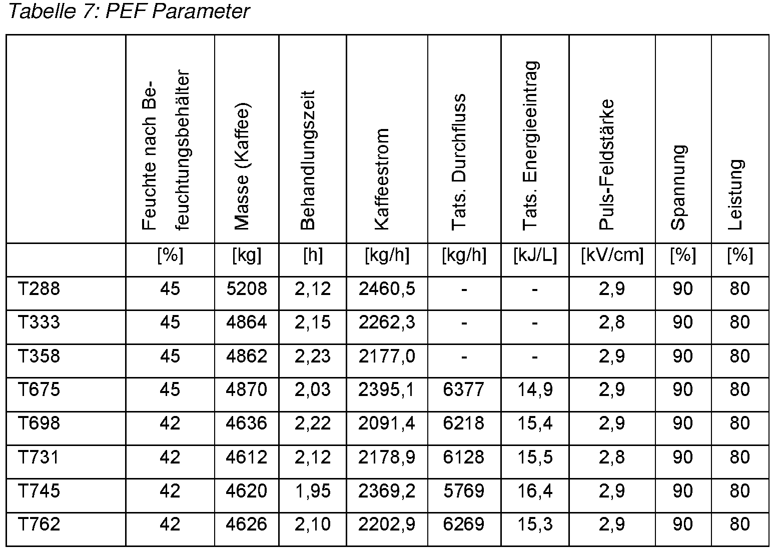

Das anhaftende Wasser wurde anschließend mit einer Trocknungsschnecke und einem Gebläse von den Kaffeebohnen abgetrennt und in den Vorbehälter zurückgeführt, während der Kaffee direkt in die Entkoffeinierungssäule transportiert wurde. In der Entkoffeinierungssäule wurde Koffein mit flüssigem COz als Extraktionsmittel extrahiert.

### Beispiel 4: Chargenweise Trocknung

Nach erfolgter Entkoffeinierung gemäß Beispiel 3 wurde der Kaffee zunächst mittels Vakuumtrocknung auf einen Restfeuchtigkeitsgehalt von 30 bis 38 % getrocknet und anschließend mittels Wirbelschichttrocknung auf einen Restfeuchtigkeitsgehalt von 9 bis 12 % getrocknet, poliert und der Apparatur entnommen.

Die Trocknungsraten der beiden Trocknungsschritte für die PEF-behandelten Chargen sowie die Referenzchargen wurden rechnerisch aus Trocknungsverlust und Trocknungszeit ermittelt und verglichen; die Ergebnisse sind in Tabelle 8 zusammengefasst sowie in Fig. 9 (für Vakuumtrocknung) und Fig. 10 (für Wirbelschichttrocknung) grafisch dargestellt.

**Tabelle 8: Trocknungsraten Beispiel 4**

| | Trocknungsrate Vakuumtrocknung [kg/min] | | Trocknungsrate Wirbelschichttrocknung [kg/min] | |
|---|---|---|---|---|
| | PEF | Referenz | PEF | Referenz |
| T675 | 2,93 | 2,91 | 4,13 | 3,57 |
| T745 | 3,38 | 2,88 | 4,54 | 3,91 |
| T762 | 2,85 | 2,65 | 4,25 | 2,81 |

Aus den Trocknungsraten der Vakuumtrocknung (hier Trocknung von ca. 45% Feuchte auf ca. 35 % Feuchte) zeigt sich im Vergleich mit den jeweiligen Referenzproben eine leichte Erhöhung der Trocknungsrate bei den PEF-Behandelten vorgequollenen, entkoffeinierten Rohkaffeebohnen (bei ansonsten gleichen Trocknungsbedingungen).

Aus den Trocknungsraten der Wirbelschichttrocknung (hier Trocknung von ca. 35% Feuchte auf ca. 11 % Feuchte) zeigt sich eine vorteilhaft um ca. 0,7 kg/min erhöhte Trocknungsrate der PEF-Behandelten entkoffeinierten, vorgequollenen Rohkaffeebohnen (bei ansonsten gleichen Trocknungsbedingungen). Eine derart vorteilhaft erhöhte Trocknungsrate erlaubt eine schnellere Trocknung und somit eine schonendere Behandlung des Kaffees und damit einhergehend vorteilhafte geschmackliche Eigenschaften. Zudem wird für das gleiche Trocknungsergebnis weniger Energie benötigt. Zudem wird für das Trocknen bei den PEF-behandelten vorgequollenen Rohkaffeebohnen weniger Zeit beansprucht, so dass für die Anlage eine höhere Gesamtproduktionsleistung erreicht werden kann.

### Beispiel 5: Koffeingehalt von gemäß Beispiel 3 entkoffeinierten und gemäß Beispiel 4 getrockneten Chargen von Rohkaffeebohnen.

Der Koffeingehalt von gemäß Beispiel 3 PEF-behandelten und entkoffeinierten sowie nach Beispiel 4 getrockneten Rohkaffeebohnen wurde jeweils nach ISO 20481 bestimmt; Entsprechende Referenzproben die bis auf die PEF-Behandlung ein gleiches Verfahren durchlaufen haben wurden als Referenzproben ebenfalls nach ISO 20481 gemessen. Ergebnisse sind in Tabelle 9 zusammengefasst und in Fig. 11a und Fig. 11b grafisch dargestellt.

**Tabelle 9: Ergebnisse der chargenweisen PEF-Behandlung**

| | Koffeingehalt Referenz | Koffeingehalt PEF | Differenz Koffeingehalt (Referenz - PEF) | Differenz Koffeingehalt |
|---|---|---|---|---|
| | [Gew.-%] | [Gew.-%] | [Gew.-%] | relativ [%] |
| T358 | 0,063 | 0,055 | 0,008 | 12,7 |
| T333 | 0,063 | 0,044 | 0,019 | 30,7 |
| T288 | 0,320 | 0,217 | 0,103 | 32,1 |
| T762 | 0,059 | 0,053 | 0,006 | 10,2 |
| T745 | 0,063 | 0,05 | 0,013 | 20,6 |
| T731 | 0,053 | 0,042 | 0,011 | 20,8 |
| T698 | 0,054 | 0,042 | 0,012 | 22,2 |

Die PEF-behandelten Chargen wurden (unter ansonsten gleichen Bedingungen) stärker entkoffeiniert jeweils verglichen mit gerösteten Kaffeebohnen der gleichen Art und Charge, die zuvor die gleichen Verfahrensschritte durchlaufen haben, lediglich ohne eine PEF-Behandlung; im rechnerischen Mittel über alle Chargen ist eine Verbesserung um 16,6% zu verzeichnen.

Eine effizientere Entkoffeinierung wird auf dem Gebiet der vorliegenden Erfindung als äußerst vorteilhaft empfunden. So lassen sich leichter niedrigere Koffeinwerte erzielen bzw. lassen sich bei geringeren Extraktionszeiten solch vorteilhafte Entkoffeinierungsergebnisse für die PEF-Behandelten Rohkaffeebohnen erzielen für die eine im Falle der nicht PEF-behandelten Rohkaffeebohnen längere Extraktionszeiten benötigt werden; so kann auch hier durch die PEF-Behandlung für die entsprechende Anlage eine höhere Gesamtproduktionsleistung erzielt werden.

### Beispiel 6: PEF-Behandlung vor der Entkoffeinierung mit Dichlormethan

Zunächst wurden Rohkaffeebohnen der Typen "Robusta" und "Arabica" im Glasreaktor mit Wasserdampf (150 g Wasserdampf auf 500 g Kaffeebohnen) auf ca. 32% befeuchtet, so dass vorgequollene Rohkaffeebohnen resultieren. Anschließend wurde in der mit Wasser befüllten Behandlungszelle eines stationären PEF-Laborgeräts mit ca. 10 kJ/kg eine PEF-Behandlung der vorgequollenen Rohkaffeebohnen durchgeführt, so dass PEF-behandelte, vorgequollene Rohkaffeebohnen resultierten. Verwendete Parameter der PEF-Behandlung sind in Tabelle 10 dargestellt. Eine Referenzprobe der gleichen Charge des vorgequollenen Rohkaffees wurde währenddessen in einem Wasserbad ohne PEF-Behandlung bewahrt, um vergleichbare Versuchsbedingungen für die Referenzcharge sicherzustellen.

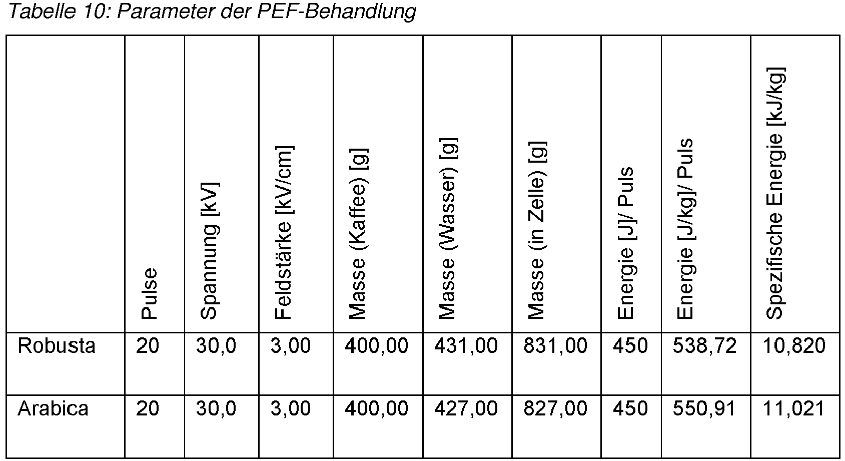

### Beispiel 7: Koffein Extraktion mit Dichlormethan als Extraktionsmittel

Von nach Beispiel 6 vorbehandelten Kaffeebohnen wurden jeweils 10 g PEF-behandelte, vorgequollene Rohkaffeebohnen bzw. nicht PEF-behandelte vorgequollene Rohkaffeebohnen, eingewogen und in eine Soxhlet- Extraktionshülse gefüllt.

Dann wurde eine Soxhlet- Extraktion mit 70mL Dichlormethan bei 60°C, 70°C, bzw. 80°C gestartet. Bei der Soxhlet-Extraktion handelt es sich um eine gängige kontinuierliche Extraktionstechnik, bei der lösliche Bestandteile aus festem Extraktionsgut nach dem Ablaufsiphonprinzip in Zyklen mit frischem Lösungsmittel, in diesem Fall Dichlormethan, extrainiert werden. Nach definierten Extraktionszeiten wurde die Extraktion jeweils abgebrochen. Es wurden mehrere Versuchsreihen für die PEF-behandelten vorgequollenen Rohkaffeebohnen sowie für die Referenzproben (nicht PEF-behandelte, vorgequollene Rohkaffeebohnen) bei 60°C und 70°C durchgeführt.

Anschließend wurden der verbliebene Koffeingehalt in den extrahierten Kaffeebohnen sowie der extrahierte Koffeinanteil im Extrakt bestimmt. Hierzu wurden die die extrahierten Kaffeebohnen unter dem Abzug bei Raumtemperatur auf ca. 11% (+/- 1%) Feuchte getrocknet und der Koffeingehalt nach ISO 20481 bestimmt. Das Extrakt wurde in einem Rotationsverdampfer eingeengt und in Aqua bidest quantitativ aufgenommen. Von der so erhaltenen wässrigen Lösung wurde nach ISO 20481 der Koffeingehalt bestimmt.

Beispielhafte Ergebnisse sind in Tabelle 11 zusammengefasst. Zudem sind beispielhaft in Fig. 12a und in Fig 12b Datenpunkte für eine Extraktion eines Robusta-Kaffees über 380 min bei 70°C dargestellt.

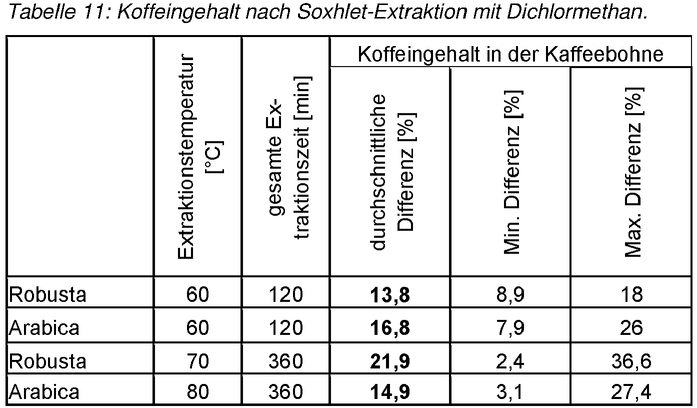

Durch eine vorhergehende PEF-Behandlung konnte im Durchschnitt der hier beispielhaft betrachteten Testkaffeebohnen unter ansonsten gleichen Bedingungen "Robusta" und "Arabica" 16,9% mehr Koffein aus den Kaffeebohnen extrahiert werden verglichen mit den entsprechenden nicht PEF-behandelten Referenzproben. Lediglich beispielhaft wurde hier Dichlormethan als Extraktionsmittel gewählt; der Fachmann wählt hier nach den Bedürfnissen des Einzelfalls ein geeignetes Extraktionsmittel aus.

Eine effizientere Entkoffeinierung wird auf dem Gebiet der vorliegenden Erfindung als äußerst vorteilhaft empfunden. So lassen sich leichter niedrigere Koffeinwerte erzielen bzw. lassen sich bei geringeren Extraktionszeiten solch vorteilhafte Entkoffeinierungsergebnisse für die PEF-Behandelten Rohkaffeebohnen erzielen für die eine im Falle der nicht PEF-behandelten Rohkaffeebohnen längere Extraktionszeiten benötigt werden; so kann auch hier durch die PEF-Behandlung für die entsprechende Anlage eine höhere Gesamtproduktionsleistung erzielt werden.

### Beispiel 8: Trocknung im Trommeltrockner

3 kg einer gemäß Beispiel 3 entkoffeinierten Probe PEF-behandelten Rohkaffees, sowie 3 kg einer gemäß Beispiel 3 entkoffeinierten Referenzprobe (Probe und Referenzprobe wurden aus einer Charge Rohkaffee entnommen) wurden jeweils zur Trocknung in einen Trommeltrockner gegeben und bei 90°C und 15 Hz getrocknet. Insbesondere bei Trocknungszeiten von einer Stunde oder mehr, bzw. bei Feuchten unter ca. 30% zeigt sich dabei kein signifikanter Unterschied zwischen der PEF-behandelten Probe und der Referenzprobe, die keiner PEF-Behandlung unterzogen wurde; entsprechende Datenpunkte sind in Fig. 13 aufgetragen.

### Beispiel 9:

Der Wasserlösliche Extraktanteil (WLE) in Rohkaffeebohnen und gerösteten Kaffeebohnen PEF-behandelter Proben und nicht PEF-behandelter Vergleichsproben wurde beispielhaft für verschiedene Proben gemäß DIN 10775-1 (geröstete Kaffeebohnen) bzw. gemäß DIN 10775-2 (Rohkaffeebohnen) bestimmt. Unter dem wasserlöslichen Extraktanteil in Roh- und Röstkaffee wird der Teil an extrahierbaren Substanzen verstanden, der durch Extraktion mit Wasser und anschließender Trocknung bei 103°C gravimetrisch bestimmt werden kann. Tabelle 12 zeigt beispielhaft die ermittelten Werte für den Wasserlöslichen Extraktanteil in Gewichtsprozent.

Insgesamt zeigt sich überraschend kein signifikanter Einfluss der PEF-Behandlung auf den wasserlöslichen Extraktanteil.

**Tabelle 12: Wasserlöslicher Extraktanteil**

| **Wasserlöslicher Extraktanteil Rohkaffee in % (WLE [%])** | | | | |
|---|---|---|---|---|
| WLE [%] | Robusta | | Arabica | |
| | PEF | Referenz | PEF | Referenz |
| | 22,9 | 21,3 | 22,7 | 23,5 |

| **Wasserlöslicher Extraktanteil Röstkaffee in % (WLE [%])** | | | | |
|---|---|---|---|---|
| WLE [%] | Robusta | | Arabica | |
| | PEF | Referenz | PEF | Referenz |
| | 30,6 | 30,9 | 26,7 | 27,7 |

### Beispiel 10: Variation der eingebrachten spezifischen Energie

In einem Verfahren gemäß Beispiel 6 wurde jeweils für Arabica und Robusta Rohkaffeebohnen die spezifische Energie (kJ/kg) bei der PEF-Behandlung über die Anzahl der Pulse bei gleichbleibender Feldstärke gemäß Tabelle 13 variiert.

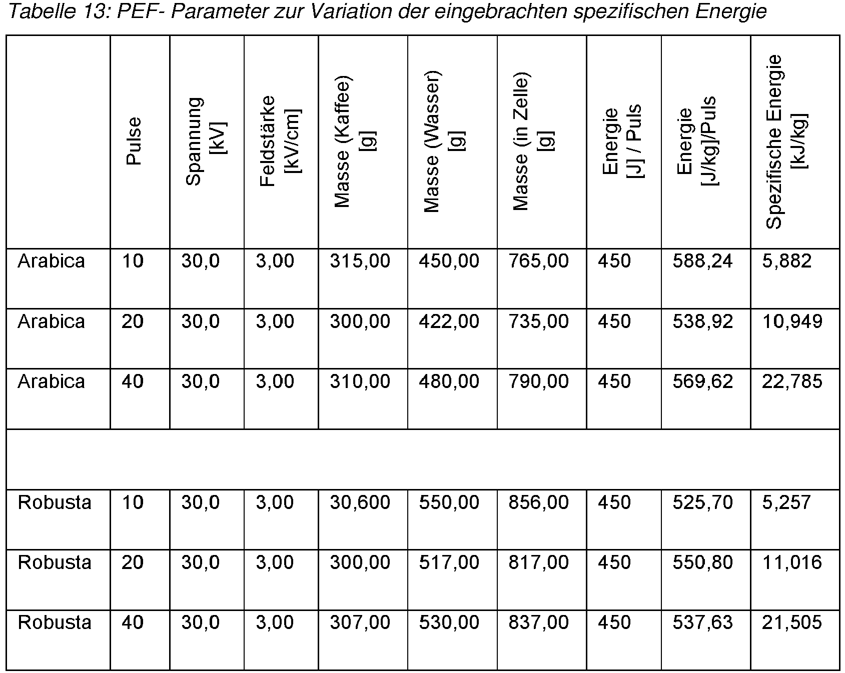

Anschließend wurde gemäß der Vorschrift von Beispiel 7 in einer Soxhlet-Apparatur mit Dichlormethan Koffein aus den behandelten Bohnen extrahiert. Die Extraktionszeiten wurden ebenfalls variiert, beispielhaft sind in Fig. 14a und Fig. 14b Werte für den in der Kaffeebohne verbliebenden Koffeingehalt nach Extraktionszeiten von 60 Minuten und 120 Minuten angegeben.

### Beispiel 11: Sensorik /Cupping:

Nach erfolgter Entkoffeinierung gemäß Beispiel 3 und erfolgter Trocknung gemäß Beispiel 4 wurde der entkoffeinierte Rohkaffee (PEF-behandelte Chargen sowie Referenzchargen) mit derselben Röstkurve auf Kaffeefarbwert (FW) 100 (± 5) geröstet. Die Röstparameter sind beispielhaft für einige Proben in Tabelle 14 angegeben.

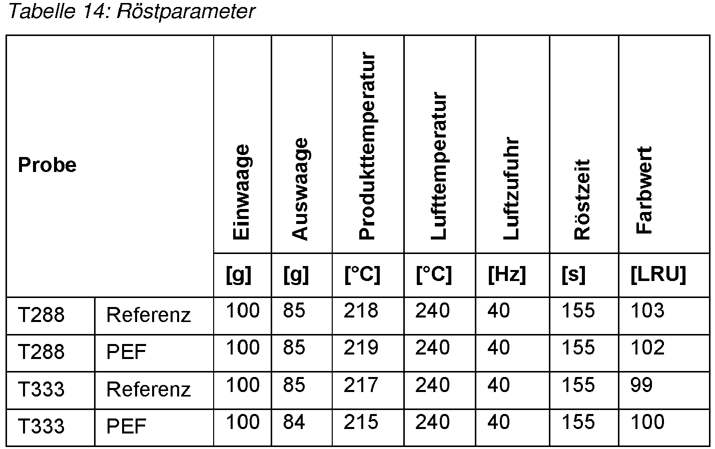

Ein Unterschied im Röstverhalten zwischen den PEF-behandelten Chargen und den nicht-PEF behandelten Referenzchargen wurde nicht festgestellt.

Zur Prüfung der Sensorik der gerösteten Kaffeebohnen wurden in einer Dreifachbestimmung pro Probe jeweils 11g der gerösteten Kaffeebohnen direkt mit einer Kaffeemühle (Mahlkönig VTA6S, Mahlstufe 7) in ein Prüfgefäß (V = 200 mL) gemahlen. Frisches Leitungswasser wurde im Wasserkocher auf 95°C erhitzt und ohne Umrühren auf den gemahlenen Kaffee gegossen. Nach 5 min Ziehzeit wurde die sogenannte Kruste abgeschöpft und der Kaffee durch ein geschultes Sensorikpanel sensorisch verkostet. Hierfür wurde im Einzelnen (i)Geschmack, (ii) Geruch, (iii) Säure und (iv) Körper des Aufgusses beurteilt. Die sensorische Beurteilung erfolgte gemäß DIN 10975.

Beispielhafte Ergebnisse der Verkostung sind in Tabelle 15 zusammengefasst. Es wurden keine Abweichungen im Vergleich zu den jeweiligen Referenzproben festgestellt.

**Tabelle 15: Sensorik / Cupping**

| **Probe** | **Sensorik/Cupping - Ergebnis** |
|---|---|
| T288 Referenz | |
| T288 PEF | Ohne Abweichung |
| T333 Referenz | |
| T333 PEF | Ohne Abweichung |
| T698 Referenz | |
| T698 PEF | Ohne Abweichung |
| T745 Referenz | |
| T745 PEF | Ohne Abweichung |
| T762 Referenz | |
| T762 PEF | Ohne Abweichung |

### Beispiel 12: NMR-Analytik

Die ¹H-NMR- Analyse der organischen Phase und der wässrigen Phase entkoffeinierter PEF-behandelter Proben und entsprechender Referenzproben ergab eine hohe Vergleichbarkeit.

### Beispiel 13: Coliforme Keime

Im Rahmen eigener Untersuchungen wurde ein erfindungsgemäßes Verfahren durchgeführt und die Belastung der Rohkaffeebohnen vor Schritt (b-v) (PEF-Behandlung vorgequollener Rohkaffeebohnen) und nach Schritt (b-v) (PEF-Behandlung vorgequollener Rohkaffeebohnen) anhand der koloniebildenden Einheiten nach Inkubation untersucht. Die Untersuchung erfolgte gemäß DIN EN ISO 4833-1.

Jeweils wurde nach der PEF-Behandlung eine geringere Menge an koloniebildenden Einheiten gefunden als vor der Untersuchung.

## Patentansprüche

1. Verfahren zum Herstellen von entkoffeinierten Rohkaffeebohnen, entkoffeinierten gerösteten Kaffeebohnen oder daraus hergestellten Zubereitungen, mit folgenden Schritten:
(b) PEF-Behandeln von Rohkaffeebohnen, so dass PEF-behandelte Rohkaffeebohnen resultieren,
(c) Extrahieren von Koffein aus den PEF-behandelten Rohkaffeebohnen mittels einer Extraktionsflüssigkeit, so dass entkoffeinierte, PEF-behandelte Rohkaffeebohnen resultieren.

2. Verfahren nach Anspruch 1, mit folgenden Schritten:
(a-v) Vorquellen von Rohkaffeebohnen mit Quellflüssigkeit, so dass vorgequollene Rohkaffeebohnen resultieren, vorzugsweise vorgequollene Rohkaffeebohnen mit einem vorbestimmten Feuchtegehalt,
(b-v) PEF-Behandeln der vorgequollenen Rohkaffeebohnen, so dass PEF-behandelte, vorgequollene Rohkaffeebohnen resultieren,
(c-v) Extrahieren von Koffein aus den PEF-behandelten, vorgequollenen Rohkaffeebohnen, mittels einer Extraktionsflüssigkeit, so dass entkoffeinierte, PEF-behandelte, vorgequollene Rohkaffeebohnen resultieren.

3. Verfahren nach Anspruch 2, wobei die Quellflüssigkeit eine wässrige Quellflüssigkeit ist.

4. Verfahren nach einem der vorangehenden Ansprüche, wobei die Extraktionsflüssigkeit ausgewählt ist aus der Gruppe bestehend aus:
- flüssigem Kohlenstoffdioxid, überkritischem Kohlenstoffdioxid, Dichlormethan, Dichlorethan, Ethanol, Trichlomethan, Trichlorethan, Aceton, Ethylacetat, Methylacetat, Methanol, Kaffeeöl und Wasser,
bevorzugt ausgewählt aus der Gruppe bestehend aus:
- Wasser, Ethylacetat, flüssigem Kohlenstoffdioxid, überkritischem Kohlenstoffdioxid und Dichlormethan,
besonders bevorzugt ausgewählt aus der Gruppe bestehend aus:
- flüssigem Kohlenstoffdioxid und Dichlormethan.

5. Verfahren nach einem der vorangehenden Ansprüche, mit folgendem zusätzlichen Schritt:
(d) Trocknen der entkoffeinierten, PEF-behandelten Rohkaffeebohnen, vorzugsweise von entkoffeinierten, PEF-behandelten, vorgequollenen Rohkaffeebohnen, so dass getrocknete entkoffeinierte Rohkaffeebohnen resultieren, vorzugsweise getrocknete entkoffeinierte Rohkaffeebohnen mit einem vorbestimmten Feuchtegehalt.

6. Verfahren nach Anspruch 5, wobei das Trocknen der entkoffeinierten, PEF-behandelten, Rohkaffeebohnen, vorzugsweise das Trocknen von entkoffeinierten, PEF-behandelten, vorgequollenen Rohkaffeebohnen, mittels eines Verfahrens durchgeführt wird, welches ausgewählt ist aus der Gruppe bestehend aus:
- Wirbelschichtverfahren, Vakuumtrocknungsverfahren, Vibrationstrocknung, Gefriertrocknung, Heißlufttrocknung, Mikrowellentrocknung, Infrarottrocknung und Kombinationen davon, und
welches vorzugsweise ausgewählt ist aus der Gruppe bestehend aus:
- Wirbelschichtverfahren, Vakuumtrocknungsverfahren und Kombinationen davon,
wobei bevorzugt das Trocknungsverfahren zumindest eine Wirbelschichttrocknung umfasst, besonders bevorzugt in Kombination mit einer Vakuumtrocknung,
und
wobei ganz besonders bevorzugt zunächst die Vakuumtrocknung erfolgt und danach die Wirbelschichttrocknung.

7. Verfahren nach einem der vorangehenden Ansprüche, wobei durch die PEF-Behandlung irreversible Poren in den Zellmembranen und Zellwänden der Rohkaffeebohnen erzeugt werden.

8. Verfahren nach einem der vorangehenden Ansprüche,
wobei die Rohkaffeebohnen, vorzugsweise die vorgequollenen Rohkaffeebohnen, nach der PEF-Behandlung eine geringere Menge an coliformen Keimen aufweisen als vor der PEF-Behandlung, jeweils bestimmt gemäß ISO 4832.

9. Verfahren nach einem der vorangehenden Ansprüche, wobei beim PEF-Behandeln der Rohkaffeebohnen in Schritt (b) bzw. der vorgequollenen Rohkaffeebohnen in Schritt (b-v)
- eine Puls-Feldstärke von mindestens 0,2 kV/cm, bevorzugt mindestens 1,0 kV/cm, besonders bevorzugt mindestens 1,5 kV/cm, ganz besonders bevorzugt mindestens 2,7 kV/cm, am meisten bevorzugt eine Puls-Feldstärke im Bereich von 0,5 kV/cm bis 3 kV/cm angewendet wird,
und/oder
- ein tatsächlicher Energieeintrag von mindestens 5 kJ/L, bevorzugt mindestens 15,0 kJ/L erfolgt,
und/oder
- die Rohkaffeebohne mindestens 5 Pulsen des gepulsten elektrischen Feldes ausgesetzt wird, bevorzugt mindestens 10 Pulsen, besonders bevorzugt mindestens 18 Pulsen, ganz besonders bevorzugt mindestens 20 Pulsen, am meisten bevorzugt mindestens 25 Pulsen, vorzugsweise im Bereich von 5 bis 100 Pulsen, besonders vorzugsweise im Bereich von 5 bis 50 Pulsen, und/oder
- die Rohkaffeebohnen zumindest anfänglich einen Feuchtegehalt von mindestens 10% besitzen, bevorzugt mindestens 20% besonders bevorzugt mindestens 30%, ganz besonders bevorzugt mindestens 40%, vorzugsweise einen Feuchtegehalt im Bereich von 10 bis 50 % besitzen, besonders vorzugsweise im Bereich von 20 bis 45 %, bestimmt gemäß ISO 6673.

10. Verfahren nach einem der vorangehenden Ansprüche 2 bis 9,
wobei beim Vorquellen von Rohkaffeebohnen mit Quellflüssigkeit in Schritt (a-v), eine Aufnahme von mindestens 10 Gew.-% Quellflüssigkeit erfolgt, bevorzugt mindestens 20 Gew.-%, besonders bevorzugt mindestens 30 Gew.-%, bezogen auf die Gesamtmasse der Rohkaffeebohnen vor dem Vorquellen.

11. Entkoffeinierte Rohkaffeebohne, entkoffeinierte geröstete Kaffeebohne oder daraus hergestellte Zubereitung, herstellbar durch ein Verfahren nach einem der Ansprüche 1 bis 10, wobei
das PEF-Behandeln von Rohkaffeebohnen zu Veränderungen an Zellwänden und Zellmembranen in den Rohkaffeebohnen führt.

12. Verwendung einer PEF-Vorrichtung zur PEF-Behandlung von Rohkaffeebohnen.

13. Verwendung nach Anspruch 12, wobei die PEF-Behandlung durchgeführt wird
- vor einer Entkoffeinierung,
und/oder
- vor und/oder nach einem Vorquellen,
und/oder
- vor und/oder nach einem Trocknen,
und/oder
- vor einem Rösten
und/oder
- zur Reduktion des Keimgehalts der Rohkaffeebohnen
und/oder
- zur Verbesserung der Koffein-Extrahierbarkeit der Rohkaffeebohnen.

14. Anlage zum Entkoffeinieren von Rohkaffeebohnen in einem Verfahren gemäß einem der Ansprüche 1 bis 10, zumindest umfassend:
- eine Vorrichtung zum PEF-Behandeln von Rohkaffeebohnen,
- eine dazu nachgeschaltete Vorrichtung zum Entkoffeinieren der PEF-behandelten Rohkaffeebohnen,
- eine Vorrichtung zum Trocknen des hergestellten, entkoffeinierten Rohkaffees, wobei das Trocknen der entkoffeinierten, PEF-behandelten, Rohkaffeebohnen mittels eines Verfahrens durchgeführt wird, welches ausgewählt ist aus der Gruppe bestehend aus:
- Wirbelschichtverfahren, Vakuumtrocknungsverfahren und Kombinationen davon.

15. Anlage nach Anspruch 14, weiter umfassend
eine der Vorrichtung zum PEF-Behandeln vorgeschaltete oder nachgeschaltete Vorrichtung zum Vorquellen von Rohkaffeebohnen
und/oder
eine der Vorrichtung zum PEF-Behandeln nachgeschaltete Vorrichtung zum Entfernen anhaftenden Wassers von Rohkaffeebohnen, vorzugsweise umfassend eine Trocknungsschnecke und/oder ein Gebläse
und/oder
eine Vorrichtung zum Abfüllen und/oder Transportieren hergestellten, entkoffeinierten Rohkaffees.

## Claims

1. Process for producing decaffeinated green coffee beans, decaffeinated roasted coffee beans or preparations produced therefrom, comprising the following steps:
(b) subjecting green coffee beans to PEF treatment, with the result that PEF-treated green coffee beans are obtained,
(c) extracting of caffeine from the PEF-treated green coffee beans using an extraction liquid, with the result that decaffeinated, PEF-treated green coffee beans are obtained.

2. Process according to Claim 1, comprising the following steps:
(a-v) presoaking of green coffee beans with swelling liquid, with the result that presoaked green coffee beans are obtained, preferably presoaked green coffee beans having a predetermined moisture content,
(b-v) subjecting the presoaked green coffee beans to PEF treatment, with the result that PEF-treated, presoaked green coffee beans are obtained,
(c-v) extracting of caffeine from the PEF-treated, presoaked green coffee beans using an extraction liquid, with the result that decaffeinated, PEF-treated, presoaked green coffee beans are obtained.

3. Process according to Claim 2, wherein the swelling liquid is an aqueous swelling liquid.

4. Process according to any of the preceding claims, wherein the extraction liquid is selected from the group consisting of:
- liquid carbon dioxide, supercritical carbon dioxide, dichloromethane, dichloroethane, ethanol, trichloromethane, trichloroethane, acetone, ethyl acetate, methyl acetate, methanol, coffee oil, and water,
preferably selected from the group consisting of:
- water, ethyl acetate, liquid carbon dioxide, supercritical carbon dioxide, and dichloromethane,
particularly preferably selected from the group consisting of:
- liquid carbon dioxide and dichloromethane.

5. Process according to any of the preceding claims, comprising the following additional step:
(d) drying of the decaffeinated, PEF-treated green coffee beans, preferably decaffeinated, PEF-treated, presoaked green coffee beans, with the result that dried, decaffeinated green coffee beans are obtained, preferably dried, decaffeinated green coffee beans having a predetermined moisture content.

6. Process according to Claim 5, wherein the drying of the decaffeinated, PEF-treated, green coffee beans, preferably the drying of decaffeinated, PEF-treated, presoaked green coffee beans, is carried out by means of a process selected from the group consisting of:
- fluidized-bed processes, vacuum-drying processes, vibration drying, freeze drying, hot-air drying, microwave drying, infrared drying, and combinations thereof, and
that is preferably selected from the group consisting of:
- fluidized bed processes, vacuum drying processes, and combinations thereof,
wherein the drying process preferably comprises at least fluidized-bed drying, particularly preferably in combination with vacuum drying,
and
wherein the vacuum drying is very particularly preferably carried out first, followed by the fluidized-bed drying.

7. Process according to any of the preceding claims, wherein the PEF treatment creates irreversible pores in the cell membranes and cell walls of the green coffee beans.

8. Process according to any of the preceding claims, wherein the green coffee beans, preferably the presoaked green coffee beans, have after the PEF treatment a smaller number of coliform bacteria than before the PEF treatment, in each case determined in accordance with ISO 4832.

9. Process according to any of the preceding claims, wherein during the PEF treatment of the green coffee beans in step (b) or of the presoaked green coffee beans in step (b-v)
- a pulse field strength of at least 0.2 kV/cm, preferably at least 1.0 kV/cm, particularly preferably at least 1.5 kV/cm, very particularly preferably at least 2.7 kV/cm, most preferably a pulse field strength within the range from 0.5 kV/cm to 3 kV/cm, is applied,
and/or
- an actual energy input of at least 5 kJ/L, preferably at least 15.0 kJ/L, takes place,
and/or
- the green coffee bean is exposed to at least 5 pulses of the pulsed electric field, preferably at least 10 pulses, particularly preferably at least 18 pulses, very particularly preferably at least 20 pulses, most preferably at least 25 pulses, preferably within the range from 5 to 100 pulses, particularly preferably within the range from 5 to 50 pulses,
and/or
- the green coffee beans at least initially have a moisture content of at least 10%, preferably at least 20%, particularly preferably at least 30%, very particularly preferably at least 40%, preferably a moisture content within the range from 10 to 50%, particularly preferably within the range from 20 to 45%, determined in accordance with ISO 6673.

10. Process according to any of the preceding Claims 2 to 9,
wherein presoaking of green coffee beans with swelling liquid in step (a-v) is accompanied by absorption of at least 10% by weight of swelling liquid, preferably at least 20% by weight, particularly preferably at least 30% by weight, based on the total mass of the green coffee beans before presoaking.

11. Decaffeinated green coffee bean, decaffeinated roasted coffee bean or preparation produced therefrom, producible by a process according to any of Claims 1 to 10, wherein
the PEF treatment of green coffee beans results in changes to cell walls and cell membranes in the green coffee beans.

12. Use of a PEF device for the PEF treatment of green coffee beans.

13. Use according to Claim 12, wherein the PEF treatment is carried out
- before decaffeination,
and/or
- before and/or after presoaking,
and/or
- before and/or after drying,
and/or
- before roasting
and/or
- to reduce the microorganism content of the green coffee beans
and/or
- to improve the caffeine extractability of the green coffee beans.

14. System for decaffeinating green coffee beans in a process according to any of Claims 1 to 10, comprising at least:
- a device for the PEF treatment of green coffee beans,
- a device connected downstream thereof for decaffeinating the PEF-treated green coffee beans,
- a device for drying the decaffeinated green coffee produced, wherein the drying of the decaffeinated, PEF-treated green coffee beans is carried out by means of a process selected from the group consisting of:
- fluidized bed processes, vacuum drying processes, and combinations thereof.

15. System according to Claim 14, further comprising
a device for presoaking green coffee beans connected upstream or downstream of the device for PEF treatment
and/or
a device for removing adhering water from green coffee beans, preferably comprising a spiral dryer and/or a blower, that is connected downstream of the device for PEF treatment
and/or
a device for the transfer and/or transport of the decaffeinated green coffee produced.

## Revendications

1. Procédé de production de grains de café vert décaféiné, de grains de café torréfié décaféiné ou de préparations produites à partir de ceux-ci, avec des étapes suivantes :
(b) de traitement par CEP (champ électrique pulsé) si bien qu'il en résulte des grains de café brut traités par CEP,
(c) d'extraction de la caféine des grains de café vert traités par CEP au moyen d'un liquide d'extraction si bien que des grains de café vert décaféiné traités par CEP en résultent.

2. Procédé selon la revendication 1, avec des étapes suivantes :
(a-v) de gonflage préalable de grains de café vert avec du liquide de gonflement si bien que des grains de café vert préalablement gonflés en résultent, de préférence des grains de café vert gonflés au préalable avec une teneur en humidité prédéfinie,
(b-v) de traitement par CEP des grains de café vert gonflés au préalable si bien que des grains de café vert traités par CEP, gonflés au préalable en résultent,
(c-v) d'extraction de la caféine des grains de café vert traités par CEP, gonflés au préalable au moyen d'un liquide d'extraction si bien que des grains de café vert décaféiné traités par CEP, gonflés au préalable, en résultent.

3. Procédé selon la revendication 2, dans lequel le liquide de gonflement est un liquide de gonflement aqueux.

4. Procédé selon l'une quelconque des revendications précédentes, dans lequel le liquide d'extraction est choisi parmi le groupe constitué de :
- dioxyde de carbone liquide, dioxyde de carbone surcritique, dichlorométhane, dichloroéthane, éthanol, trichlorométhane, trichloroéthane, acétone, acétate d'éthyle, acétate de méthyle, méthanol, huile de café et eau,
de manière préférée est choisi parmi le groupe constitué de :
- eau, acétate d'éthyle, dioxyde de carbone liquide, dioxyde de carbone surcritique et dichlorométhane,
de manière particulièrement préférée est choisi parmi le groupe constitué de :
- dioxyde de carbone liquide et dichlorométhane.

5. Procédé selon l'une quelconque des revendications précédentes, avec une étape supplémentaire suivante :
(d) de séchage des grains de café vert décaféiné traités par CEP, de préférence de grains de café vert décaféiné, traités par CEP, gonflés au préalable si bien que des grains de café vert décaféiné séchés, de préférence des grains de café vert décaféiné séchés avec une teneur en humidité prédéfinie, en résultent.

6. Procédé selon la revendication 5, dans lequel le séchage des grains de café vert décaféiné traités par CEP, de préférence le séchage de grains de café vert décaféiné, traités par CEP, gonflés au préalable est mis en oeuvre au moyen d'un procédé, lequel est choisi parmi le groupe constitué de :
- procédé à lit fluidisé, procédé de séchage sous vide, séchage par vibrations, séchage par congélation, séchage par air très chaud, séchage par micro-ondes, séchage par infrarouges et combinaisons de ceux-ci, et
lequel est choisi de préférence parmi le groupe constitué de :
- procédé à lit fluidisé, procédé de séchage sous vide et combinaisons de ceux-ci,
dans lequel de manière préférée le procédé de séchage comprend au moins un séchage à lit fluidisé, de manière particulièrement préférée en combinaison avec un séchage sous vide,
et
dans lequel, de manière très particulièrement préférée, le séchage sous vide est effectué en premier lieu puis le séchage à lit fluidisé.

7. Procédé selon l'une quelconque des revendications précédentes, dans lequel des pores irréversibles sont générés dans les membranes cellulaires et les parois cellulaires des grains de café vert par le traitement par CEP.

8. Procédé selon l'une quelconque des revendications précédentes, dans lequel les grains de café vert, de préférence les grains de café vert gonflés au préalable, présentent, après le traitement par CEP, une quantité inférieure de germes conformes qu'avant le traitement par CEP, respectivement définie selon la norme ISO 4832.

9. Procédé selon l'une quelconque des revendications précédentes, dans lequel, lors du traitement par CEP des grains de café vert lors de l'étape (b) ou des grains de café vert gonflés au préalable lors de l'étape (b-v),
- une intensité de champ d'impulsion d'au moins 0,2 kV/cm, de manière préférée d'au moins 1,0 kV/cm, de manière particulièrement préférée d'au moins 1,5 kV/cm, de manière très particulièrement préférée d'au moins 2,7 kV/cm, idéalement une intensité de champ d'impulsion dans la plage de 0,5 kV/cm à 3 kV/cm est appliquée,
et/ou
- un apport d'énergie réel d'au moins 5 kJ/L, de manière préférée d'au moins 15,0 kJ/L, est effectué,
et/ou
- le grain de café vert est exposé au moins à 5 impulsions du champ électrique pulsé, de manière préférée au moins à 10 impulsions, de manière particulièrement préférée au moins à 18 impulsions, de manière très particulièrement préférée au moins à 20 impulsions, idéalement au moins à 25 impulsions, de préférence dans la plage de 5 à 100 impulsions, de manière préférée de préférence dans la plage de 5 à 50 impulsions,
et/ou
- les grains de café vert possèdent au moins initialement un teneur en humidité d'au moins 10 %, de manière préférée d'au moins 20 %, de manière particulièrement préférée d'au moins 30 %, de manière très particulièrement préférée d'au moins 40 %, de préférence une teneur en humidité dans la plage de 10 à 50 %, en particulier de préférence dans la plage de 20 à 45 %, définie selon la norme ISO 6673.

10. Procédé selon l'une quelconque des revendications précédentes 2 à 9,
dans lequel, lors du gonflage préalable de grains de café vert avec du liquide de gonflement dans l'étape (a-v), une absorption d'au moins 10 % en poids de liquide de gonflement est effectuée, de manière préférée d'au moins 20 % en poids, de manière particulièrement préférée d'au moins 30 % en poids, par rapport à la masse totale des grains de café vert avant le gonflage préalable.

11. Grain de café vert décaféiné, grain de café torréfié décaféiné ou préparation produite à partir de ceux-ci, pouvant être produit par un procédé selon l'une quelconque des revendications 1 à 10, dans lequel
le traitement par CEP de grains de café vert donne lieu à des modifications de parois cellulaires et de membranes cellulaires des grains de café vert.

12. Utilisation d'un dispositif à CEP destiné à traiter par CEP des grains de café vert.

13. Utilisation selon la revendication 12, dans lequel le traitement par CEP est mis en oeuvre
- avant une décaféination,
et/ou
- avant et/ou après un gonflage préalable,
et/ou
- avant et/ou après un séchage
et/ou
- avant une torréfaction
et/ou
- pour réduire la teneur en germes des grains de café vert et/ou
- pour améliorer la capacité d'extraction de caféine des grains de café vert.

14. Installation de décaféination de grains de café vert dans un procédé selon l'une quelconque des revendications 1 à 10, comprenant au moins :
- un dispositif de traitement par CEP de grains de café vert,
- un dispositif installé en aval destiné à décaféiner des grains de café vert traités par CEP,
- un dispositif destiné à sécher le grain de café vert décaféiné produit, dans lequel le séchage des grains de café vert décaféiné traités par CEP est mis en oeuvre au moyen d'un procédé, lequel est choisi parmi le groupe constitué de :
-- procédé à lit fluidisé, procédé de séchage sous vide et combinaisons de ceux-ci.

15. Installation selon la revendication 14, comprenant par ailleurs
un dispositif installé en amont ou installé en aval du dispositif de traitement par CEP destiné à faire gonfler au préalable des grains de café vert
et/ou
un dispositif installé en aval du dispositif de traitement par CEP, destiné à éliminer de l'eau adhérente de grains de café vert, de préférence comprenant une vis sans fin de séchage et/ou une soufflante
et/ou
un dispositif destiné à transvaser et/ou à transporter du café vert décaféiné produit.
